(19) Europäisches Patentamt
European Patent Office
Office européen des brevets

(11) **EP 3 196 174 B1**

(12) **EUROPÄISCHE PATENTSCHRIFT**

(45) Veröffentlichungstag und Bekanntmachung des Hinweises auf die Patenterteilung:
**12.08.2020 Patentblatt 2020/33**

(51) Int Cl.:
***C03C 10/14*** *(2006.01)*     ***C03C 3/087*** *(2006.01)*
***C03C 3/095*** *(2006.01)*

(21) Anmeldenummer: **16001377.7**

(22) Anmeldetag: **20.06.2016**

(54) **VERFAHREN ZUR HERSTELLUNG EINES NICHT EINGEFÄRBTEN GLASKERAMISCHEN MATERIALS MIT GERINGEM STREULICHTANTEIL SOWIE VERFAHRENSGEMÄSS HERGESTELLTES GLASKERAMISCHES MATERIAL UND DESSEN VERWENDUNG**

METHOD FOR THE MANUFACTURE OF A NOT COLOURED GLASS-CERAMIC MATERIAL WITH A REDUCED DIFFUSED LIGHT AND A GLASS CERAMIC MATERIAL PRODUCED ACCORDING TO SAID METHOD AND ITS USE

PROCEDE DE FABRICATION D'UN MATERIAU EN VITROCERAMIQUE NON COLORE COMPRENANT UNE PROPORTION DE LUMIERE DIFFUSEE FAIBLE ET MATERIAU EN VITROCERAMIQUE PRODUIT SELON LEDIT PROCEDE ET SON UTILISATION

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **21.01.2016 DE 102016101066**

(43) Veröffentlichungstag der Anmeldung:
**26.07.2017 Patentblatt 2017/30**

(73) Patentinhaber: **Schott AG**
**55122 Mainz (DE)**

(72) Erfinder:
• **Aksel, Elena**
  **65187 Wiesbaden (DE)**
• **Schneider, Meike**
  **65232 Taunusstein (DE)**
• **Hochrein, Oliver**
  **55130 Mainz (DE)**
• **Rüdinger, Bernd**
  **55286 Wörrstadt (DE)**
• **Gabel, Falk**
  **65388 Schlangenbad (DE)**
• **Weiss, Evelin**
  **55131 Mainz (DE)**
• **Breitbach, Christian**
  **64285 Darmstadt (DE)**

(74) Vertreter: **Herden, Andreas F.**
**Blumbach - Zinngrebe**
**Patent- und Rechtsanwälte PartG mbB**
**Alexandrastraße 5**
**65187 Wiesbaden (DE)**

(56) Entgegenhaltungen:
EP-A1- 1 170 264     EP-A1- 3 040 318
DE-A1-102010 006 232     US-A1- 2010 304 948

**Beschreibung**

Gebiet der Erfindung

Die Erfindung betrifft ein Verfahren zur Herstellung eines vorzugsweise nicht eingefärbten glaskeramischen Materials, insbesondere eines nicht eingefärbten glaskeramischen Materials mit geringem Streulichtanteil. Weitere Aspekte der Erfindung betreffen ein verfahrensgemäß hergestelltes glaskeramisches Material sowie dessen Verwendung.

Hintergrund der Erfindung

Glaskeramiken, insbesondere LAS-Glaskeramiken, deren Hauptbestandteile aus Lithiumoxid, Aluminiumoxid und Siliziumoxid gebildet sind, sind bereits seit vielen Jahren bekannt. Aufgrund ihrer besonderen Materialeigenschaften, beispielsweise ihres geringen Ausdehnungskoeffizienten, ihrer hohen Festigkeit und ihres Thermoschockverhaltens, finden sie breiten Einsatz. Insbesondere werden aus solchen Glaskeramiken Kochflächen hergestellt.

Für die ersten Kochflächen dieser Art wurden in der Regel entweder transparente Glaskeramiken, die mit Hilfe von Farboxiden, beispielsweise Vanadiumoxid, eingefärbt waren und als Hauptkristallphase Hochquarzmischkristall (in der Literatur teilweise auch als β-Eukryptit oder als β-Eukryptit-artige Phase bezeichnet) aufwiesen, oder transluzent-opake Glaskeramiken, die als Hauptphase Keatit-Mischkristalle (in der Literatur teilweise auch als Spodumen oder Spodumen-artige Phase bezeichnet) aufwiesen und entweder weiß ausgebildet waren oder ebenfalls durch Farboxide gefärbt vorlagen, verwendet. Heute allerdings werden immer häufiger transparent-farblose Glaskeramiken eingesetzt, welche als Hauptkristallphase Hochquarzmischkristalle aufweisen. Solche Glaskeramiken erlauben es in Kombinationen mit Unterseitenbeschichtungen, eine Vielzahl von Farben und optischen Effekten zu erzeugen, und ermöglichen so eine große Designfreiheit.

Allerdings ist insbesondere die Festigkeit, beispielsweise die Biegefestigkeit und/oder die Stoßfestigkeit solcher Glaskeramiken eine besonders kritische Größe, die bereits durch leichte Oberflächenverletzungen, beispielsweise Kratzer, herabgesetzt werden kann. So kann es handhabungsbedingt, beispielsweise durch Prozesse in der Nachverarbeitung der Glaskeramiken wie Dekoration, Schleifen und/oder Bohren, aber auch beim Transport, immer wieder zu Oberflächendefekten kommen, durch welche die Festigkeit des Produkts deutlich vermindert wird.

Eine Möglichkeit, Glaskeramiken mit einer verringerten Anfälligkeit gegenüber Oberflächendefekten bereitzustellen, stellt die Verwendung von Keatit-Glaskeramiken dar. Allerdings sind diese in der Regel transluzent-opak, d.h. mit einem großen Streulichtanteil, ausgebildet. Allerdings gibt es einen breiten Stand der Technik, welcher die Bereitstellung transparenter, Keatit-haltiger Kristallphasen umfassender Glaskeramiken mit hoher Festigkeit beschreibt.

Das US-amerikanische Schutzrecht US 4,755,488 A offenbart beispielsweise einen transparenten glaskeramischen Artikel hoher Härte sowie großer mechanischer Festigkeit, welcher einen inneren sowie einen äußeren Bereich aufweist. Der innere Bereich weist eine kristalline Phase auf und umfasst 55 bis 75 Gew.-% $SiO_2$, 13 bis 30 Gew.-% $Al_2O_3$, 1 bis 5 Gew.-% $Li_2O$, 1 bis 5 Gew.-% $Na_2O$ und 2 bis 9 Gew.-% der Summe von $TiO_2$, $ZrO_2$ und $P_2O_5$, wobei die vorstehend genannten Bestandteile zwischen 95 bis 100 Gew.-% des glaskeramischen Artikels bilden und weiterhin der äußere Bereich des Artikels die solche Glaszusammensetzung aufweist wie der innere Bereich mit dem Unterschied, dass zumindest ein Teil der Natrium-Ionen im äußere Bereich durch Kalium-Ionen ausgetauscht sind, worauf die gesteigerte Festigkeit zurückzuführen ist. Der Ionenaustausch erfolgt dabei durch einen zusätzlichen Verfahrensschritt. Die kristalline Phase der Glaskeramik kann entweder aus einem HochquarzMischkristall gebildet sein oder aus einem Spodumen, wobei der Hochquarzmischkristall bevorzugt ist. Weiterhin werden keine Aussagen über den Gesamttransmissionsgrad oder die Streuung des solcherart erhaltenen glaskeramischen Artikels getroffen.

Keatit-Mischkristall-Glaskeramiken, die mittels Ionenaustausch vorgespannt werden, werden auch in der deutschen Offenlegungsschrift DE 2 211 317 A1 beschrieben. Dieser Prozess ist jedoch durch den zusätzlichen Prozessschritt mit zusätzlichen Kosten verbunden.

Weiterhin offenbart das US-amerikanische Schutzrecht US 4,218,512 A glaskeramische Artikel, welche durch eine Druckspannung ausübende Oberflächenschicht vorgespannt vorliegen. Diese Oberflächenschicht wird durch eine Kontrolle des Kristallisationsprozesses erzeugt und führt dazu, dass an der Oberfläche der glaskeramischen Artikel andere Kristallformen vorliegen als im Innern. Die solcherart erhaltenen glaskeramischen Artikel sind transluzent ausgebildet. Der in diesem Schutzrecht offenbarte Keramisierungsprozess umfasst insbesondere ein rapides Abkühlen des Artikels, sobald sich die gewünschte Struktur eingestellt hat. Zwar sind auf diese Weise Transmissionsgrade von 70% möglich, allerdings wird keine Aussage über die Streuung der Glaskeramik getroffen. Weiterhin sind für diesen Prozess sehr lange Keramisierungszeiten erforderlich, welche beispielsweise 21,5 Stunden umfassen, wobei hierbei noch nicht ein gezieltes Abkühlen berücksichtigt wurde. Eine wirtschaftliche Herstellung ist somit mit dem vorgeschlagenen Prozess kaum möglich.

Das britische Schutzrecht GB 1 268 845 offenbart ein Verfahren zur Herstellung eines kristallisierten Glases, welches eine äußere Schicht, die eine Druckspannung aufbaut, sowie eine innere Schicht aufweist. Die äußere Schicht weist Kristallite von Hochquarzmischkristall auf, die innere Schicht Kristallite von Keatit. Das kristallisierte Glas weist einen Mindestgehalt von Fluor von 0,01 Gew.-% auf und verfügt über eine hohe Biegefestigkeit. Allerdings werden keine Aussagen über die optischen Eigenschaften, beispielsweise Transmission und/oder Streuung, getroffen. Auch ist der Fluor-Gehalt dieser Glaskeramiken, wenngleich vor dem Hintergrund einer reduzierten Temperatur der Keatit-Bildung produktionstechnisch sinnvoll, unter Umweltschutz- und Sicherheitsaspekten als kritisch zu sehen und sollte daher nach Möglichkeit vermieden werden. Da die Bildung von Keatit durch Fluor beschleunigt wird, ist zudem die Herstellung von einem transparenten Material mit geringer Streuung schwierig.

Dies zeigt beispielsweise auch die US-amerikanische Schutzrechtsanmeldung US 2005/224491 A1. Bei einem Fluor-Gehalt zwischen 1 und 3 Gew.-% beträgt zwar die Temperatur, bei der Keatit gebildet wird, lediglich zwischen 780 und 835°C, allerdings werden auf diese Weise lediglich opake Keatit-Glaskeramiken erhalten.

Weiterhin offenbart das US-amerikanische Schutzrecht US 4,285,728 A niedrigdehnende Glaskeramiken, welche als vorherrschende Kristallphasen Hochquarzmischkristalle, Keatit oder beides aufweisen. Die Glaskeramiken können sowohl transparent, d.h. mit einer geringen Streuung, als auch opak ausgebildet sein sowie weiterhin gefärbt oder ungefärbt vorliegen. Weiterhin wird keine Aussage getroffen, welche Kristallphase in welcher Glaskeramik vorliegt. Auch Aussagen über eine mögliche unterschiedliche Verteilung der Kristallphasen in Innern der Glaskeramik und an ihren Grenzflächen wird nicht getroffen.

Die deutsche Offenlegungsschrift DE 1 771 149 A1 beschreibt die Herstellung sowohl von transparenten als auch transluzenten und opaken Glaskeramiken. Die genannten Zusammensetzungen zeichnen sich durch einen geringen Gehalt von lediglich 2 Gew.-% an dem Keimbildner $TiO_2$ aus und umfassen weiterhin ZnO bis zu 3,8 Gew.-%. Bevorzugt ist weiterhin Fluor mit bis zu 0,3 Gew.-% enthalten. Der Offenbarung kann weiterhin entnommen werden, dass die transparenten Glaskeramiken als Hauptkristallphase $\beta$-Eukryptit aufweisen, während die Spodumen-haltigen Glaskeramiken durchscheinend/transluzent oder opak ausgebildet sind.

Die Herstellung von Keatit-Mischkristall-Glaskeramiken mit besonders hoher Festigkeit durch eine Oberflächenschicht mit geringerer Ausdehnung, beispielsweise einer Oberflächenschicht, welche Hochquarz-Mischkristalle umfasst, offenbart das US-amerikanische Schutzrecht US 3,764,444 A. Dabei hat die Oberflächenschicht eine andere Zusammensetzung als der Kern, was beispielsweise durch einen Ionenaustausch erreicht wird. Die gleichzeitige Einstellung der Transparenz ist nicht offenbart.

Die US-amerikanische Schutzrechtsanmeldung US 2005/0153142 A1 offenbart Glaskeramiken, welche eine Oberflächenschicht und einen darunterliegenden Kern aufweisen, wobei sich die Oberflächenschicht und der Kern dadurch unterscheiden, dass sie einen unterschiedlichen Grad an Kristallinität aufweisen. Hierbei ist die Kristallinität in der Oberflächenschicht stärker ausgeprägt, indem mindestens ein die Kristallisation förderndes Element, beispielsweise Cu, Zr, La, oder Zn mit einem höheren Gehalt in der Oberflächenschicht als im Kern bzw. Bulk der Glaskeramik vorliegt. Auf diese Weise soll ein ansprechender optischer Eindruck der Glaskeramik erhalten werden. Zwar können die dort offenbarten Glaskeramiken auch Keatit-Mischkristalle umfassen, allerdings ist die Herstellung transparenter, Keatit-umfassender Glaskeramiken nicht beschrieben.

Die Verwendung von Fluor als Läutermittel oder zur Unterstützung der Läuterung in Keatit-Glaskeramiken wird in US 2006/160689 (Huzhou, Priorität 2005) und US 2007/004578 (Eurokera, Priorität 2006) vorgeschlagen. Auch hier werden jedoch nur transluzente oder opake Keatit-Glaskeramiken hergestellt.

Die europäische Schutzrechtsanmeldung EP 0 861 014 A1 beschreibt die Verwendung einer transparenten Glaskeramik mit Keatit als einer möglichen Kristallphase als Kochfläche. Diese Glaskeramik wird jedoch durch reine $TiO_2$-Keimbildung in dem System $Li_2O$-MgO-$Al_2O_3$-$SiO_2$ hergestellt. Dies führt, insbesondere bei hohen Magnesium-Gehalten, zur Bildung störender Nebenphasen, die die Transparenz negativ beeinflussen. Besonders störend ist hierbei die Ausbildung komplexer kristalliner Mischmetalloxide, beispielsweise von $MgTiO_3$, welche zu einer erhöhten Streuung der Glaskeramik führen. Weiterhin kommt es durch einen hohen Gehalt von $TiO_2$, welcher bei der Verwendung von $TiO_2$ als alleinigem Keimbildner notwendig ist, in der Regel zu einer unerwünschten Braunfärbung.

Die deutsche Schutzrechtsanmeldung DE 100 17 701 A1 beschreibt ein floatbares Glas, welches einer Kristallisation zugänglich ist und beispielsweise in eine Glaskeramik umgewandelt werden kann, welche Hochquarz-Mischkristalle oder Keatit-Mischkristalle umfasst. Dabei werden transparente, transluzente oder opake Glaskeramiken hergestellt. Zwar offenbart die Schutzrechtanmeldung, dass auch Keatit-haltige Glaskeramiken transparent ausgebildet sein können, allerdings wird kein Hinweis auf die notwendigen Keramisierungsbedingungen oder den benötigten Keimbildnergehalt gegeben. Auch die Umwandlung in eine Keatit-haltige Glaskeramik mit einer Hochquarz-haltigen Oberfläche wird nicht beschrieben.

Eine Glaskeramik mit Hochquarz- und/oder Keatit-Mischkristallen und hoher Transmission im Nahen Infrarot (1050 nm) für die Verwendung als Kaltlichtreflektor wird in dem deutschen Schutzrecht DE 101 10 225 C2 beschrieben. Diese Glaskeramik ist jedoch im Sichtbaren opak oder transluzent, sobald sich Keatit als Kristallphase bildet.

Die britische Schutzrechtsanmeldung GB 1095254 A offenbart Glaskeramiken im System $Li_2O$-$Al_2O_3$-$SiO_2$ mit den Keimbildnern $TiO_2$, $ZrO_2$ und $SnO_2$. Beschrieben ist die Herstellung transluzenter Keatit-Glaskeramiken, was bei den gewählten Zusammensetzungen mit mind. 4 % $B_2O_3$ bzw. MgO durch den Einsatz von mindestens 0,8 % $SnO_2$

erreicht wird. Durch die gewählten Zusammensetzungen wird die Entglasungsneigung gesteigert und somit die Formgebung erschwert. Weiterhin können auf diese Weise keine transparenten Glaskeramiken, d.h. Glaskeramiken mit geringem Streulichtanteil, erhalten werden.

Weiterhin offenbart die deutsche Offenlegungsschrift DE 10 2007 025 893 A1 ein glaskeramisches Panzermaterial. Die Hauptkristallphase der Glaskeramik umfasst dabei Keatit-Mischkristall. Auf diese Weise können in Abhängigkeit von den genauen Kristallisierungs- bzw. Keramisierungsbedingungen und den daraus resultierenden Kristallitgrößen Transmissionsgrade bis zu 0,87 realisiert werden, wobei allerdings nicht angegeben ist, auf welche Dicken sich solche Transmissionswerte beziehen. Weiterhin zeichnet sich das glaskeramische Panzermaterial durch eine hohe Festigkeit, bestimmt als Beschussfestigkeit, aus. Allerdings enthalten die beschriebenen Glaskeramiken hohe Gehalte von $Li_2O$ von bis zu 10 Gew.-%. Solche Glaskeramiken weisen daher in der Regel hohe thermische Ausdehnungskoeffizienten auf. Somit können solche Glaskeramiken trotz ihrer hohen Festigkeiten nicht in Anwendungen mit hohen Temperaturunterschieden, beispielsweise als Kaminsichtscheibe oder als Kochfeld, eingesetzt werden. Weiterhin ist auch die Bildung einer Hochquarz-haltigen Oberflächenschicht nicht beschrieben.

Die deutsche Offenlegungsschrift DE 10 2010 006 232 A1 offenbart Hochleistungsglaskeramiken, welche drei verschiedenenartige Gefüge umfassen, wobei das erste, außenliegende Gefüge überwiegend glasig ausgebildet ist, im zweiten, sich daran anschließenden Gefüge einen mittleren Kristallitgehalt aufweist und das dritte, innenliegende Gefüge ganz überwiegend aus einem Keatit-Mischkristall gebildet ist. Diese Hochleistungsglaskeramiken verfügen über eine hohe Festigkeit und sind transluzent bis opak ausgebildet. Besonders hohe Festigkeiten werden dann erzielt, wenn in den oberflächennahen Schichten Gahnit $ZnAl_2O_4$ enthalten ist. Damit offenbart die DE 10 2010 006 232 A1 zwar Glaskeramiken mit hohen Festigkeiten, allerdings werden die beschriebenen besonders hohen Festigkeitswerte lediglich für Glaskeramiken erzielt, welche Gahnit umfassen. Die Anwesenheit kristalliner Phasen von komplexen Mischmetalloxiden führt allerdings dazu, dass in den Glaskeramiken eine sehr hohe Streuung auftritt, was sich beispielhaft in den in der DE 10 2010 006 232 A1 als vorteilhaft angestrebten Weißwerten von mehr als L* = 95 äußert. Die ebenfalls offenbarten hohen Heizraten sind weiterhin für die Bildung einer transparenten Keatit-Glaskeramik schädlich.

Die europäische Patentanmeldung EP 3 040 318 A1 betrifft ein transparentes glaskeramisches Substrat, welches aus einer transparenten, eingefärbten LAS-Glaskeramik erhalten wird, sowie ein Verfahren zur Herstellung eines solchen Substrats. Das glaskeramische Substrat weist einen Kern mit Keatit-Mischkristallen als vorherrschenden Kristallphase auf sowie eine Gradientenschicht mit Hochquarzmischkristall als vorherrschender Kristallphase.

Die europäische Patentanmeldung EP 1 170 264 A1 betrifft eine transluzente Glaskeramik mit einer Lichttransmission im Sichtbaren von 0,5 bis 10 % bei 4 mm Probendicke und Keatit-Mischkristallen als vorherrschender Kristallphase im Innern der Glaskeramik.

Weiterhin betrifft die US-amerikanische Patentanmeldung US 2010/304948 A1 transparente, eingefärbte Glaskeramiken mit Beta-Quarz als vorherrschender Kristallphase.

Zusammengefasst sind somit Verfahren zur Herstellung von Glaskeramiken, welche als kristalline Hauptphase Keatit-Mischkristall umfassen, bekannt. Sind diese Glaskeramiken allerdings so ausgebildet, dass ein nur geringer Streulichtanteil erzielt wird, weisen sie in der Regel keine besonders hohe Festigkeit und/oder sehr hohe Ausdehnungskoeffizienten auf und/oder sind nur mit unwirtschaftlichen langwierigen Prozessen, welche beispielsweise eine Keramisierung von mehr als 20 Stunden Dauer umfassen, zu erhalten. Solche Glaskeramiken sind daher nicht in Anwendungen, bei denen große Temperaturunterschiede erreicht werden, beispielsweise Kochflächen, einsetzbar. Zwar sind auch hochfeste Glaskeramiken bekannt, welche Keatit als Hauptkristallphase umfassen. Diese sind jedoch transluzent bis opak ausgebildet. Die Transluzenz bzw. Opazität ist dabei auf den hohen Streulichtanteil dieser Glaskeramiken zurückzuführen, was beispielsweise auf das Vorhandensein kristalliner Phasen komplexer Mischmetalloxide, beispielsweise von Oxiden mit Spinell- oder Ilmenit-artigen Strukturen, zurückzuführen ist. Diese kristallinen Nebenbestandteile sind zwar förderlich für die Ausbildung der beschriebenen hohen Festigkeit; damit ist aber keine ausreichende Transparenz der Keatit-haltigen Glaskeramiken, gekennzeichnet durch einen geringen Streuanteil, erzielbar.

Somit besteht ein Zielkonflikt bei der Herstellung hochfester Glaskeramiken mit nur geringer Streuung von Licht im Wellenlängenbereich von 380 bis 780 nm, sodass bislang ein Kompromiss zwischen einer gerade noch ausreichenden Transparenz und einer gerade noch ausreichenden Festigkeit gefunden werden musste. Weiterhin war insbesondere die Empfindlichkeit von Glaskeramiken gegenüber Oberflächenbeschädigungen, beispielsweise Kratzern, sehr hoch, sodass zwar nominell hohe Biege- und/oder Stoßfestigkeiten realisierbar waren, diese jedoch bereits durch leichte Kratzer, beispielsweise in der Handhabung der Glaskeramik in Fertigungsprozessen, in kritischem Maße herabgesetzt wurde.

Es besteht folglich Bedarf an einem Verfahren, mit welchem auf einfache Weise ein vorzugsweise nicht eingefärbtes glaskeramisches Material mit geringem Streulichtanteil wirtschaftlich herstellbar ist.

Aufgabe der Erfindung

Die Erfindung betrifft ein Verfahren zur Herstellung eines vorzugsweise nicht eingefärbten glaskeramischen Materials mit geringem Streulichtanteil. Weitere Aspekte der Erfindung betreffen verfahrensgemäß hergestellte Materialien sowie deren Verwendung.

Definitionen

Im Rahmen der vorliegenden Erfindung wird als Glaskeramik ein Material bezeichnet, welches in einem mindestens zweistufigen Prozess erhalten wird, wobei als erster Schritt das vollständige Aufschmelzen der das Material bildenden Komponenten erfolgt, sodass eine Glasschmelze und aus dieser durch die Erstarrung der Schmelze ein glasiger Körper erhalten wird. Dabei ist die Glasschmelze so zusammengesetzt, dass das erhaltene Glas kristallisierbar, d.h. einer gesteuerten Kristallisation zugänglich, ist. In einem zweiten Schritt wird der erhaltene glasige Körper in einer Temperaturbehandlung einer gesteuerten Kristallisation unterzogen, sodass eine Glaskeramik, umfassend eine glasige Phase sowie mindestens eine kristalline Phase, erhalten wird. Im Rahmen der vorliegenden Erfindung wird eine Glaskeramik auch als glaskeramisches Material bezeichnet.

Die im zweiten Schritt der Glaskeramikherstellung durchgeführte Temperaturbehandlung wird auch als Keramisierung bezeichnet und umfasst insbesondere eine Kristallisation. Dabei umfasst die Keramisierung neben der Kristallisation der gewünschten Hauptkristallphase auch die Schritte der Keimbildung, des Kristallwachstums und/oder der gezielten Umwandlung einer bereits vorhandenen Kristallphase in eine weitere kristalline Phase. Zusammengefasst kann dieser Prozess der Keimbildung, des Kristallwachstums und/oder der Kristallumwandlung auch als gesteuerte Kristallisation bezeichnet werden. Im Rahmen der vorliegenden Erfindung werden die Begriffe der Keramisierung und der gesteuerten Kristallisation daher auch synonym verwendet.

Ein Glas, welches eine Zusammensetzung aufweist, die einer gesteuerten Kristallisation bzw. Keramisierung zugänglich ist, wird im Sinne dieser Erfindung als Grünglas, keramisierbares Glas oder kristallisierbares Glas bezeichnet.

Im Rahmen der vorliegenden Erfindung werden die Begriffe der Hochquarz-Glaskeramik sowie der Hochquarz-Mischkristall-Glaskeramik synonym für Glaskeramiken mit einer Hauptkristallphase, deren kristalline Struktur, bestimmbar mittels Röntgenbeugung, Hochquarz-ähnlich ist, verwendet. Eine solche Hochquarz-ähnliche kristalline Struktur weisen insbesondere Hochquarz und Hochquarz-Mischkristalle sowie $\beta$-Eukryptit auf.

Weiterhin werden im Rahmen der vorliegenden Erfindung die Begriffe der Keatit-Glaskeramik sowie der Keatit-Mischkristall-Glaskeramik synonym für Glaskeramiken verwendet, welche als Hauptkristallphase eine kristalline Verbindung umfassen, welche eine Keatit-artige kristalline Struktur, bestimmbar mittels Röntgenbeugung, aufweist. Eine solche Keatit-ähnliche kristalline Struktur weisen insbesondere Keatit und Keatit-Mischkristalle sowie $\beta$-Spodumen auf.

Im Sinne der Erfindung liegt eine Hauptkristallphase dann vor, wenn ihr Anteil mehr als 50 Vol.-% der Summe der Kristallphasenanteile übersteigt.

Ein Kristallit bezeichnet einen Kristall, also einen Festkörper mit einer dreidimensional-geordneten Struktur, welcher geringe Dimensionen aufweist, d.h. einen maximalen Durchmesser von 1 $\mu$m. Üblicherweise liegen in glaskeramischen Materialien kristalline Phasen also solche Kristallite vor, wobei die maximalen Durchmesser häufig noch deutlich geringer sind. Im Rahmen der vorliegenden Erfindung werden daher die Begriffe "Kristall" und "Kristallit" weitgehend synonym verwendet.

Komplexe kristalline Mischmetalloxide im Sinne der vorliegenden Erfindung sind Metalloxide, in welchen mindestens zwei Metalle eine Verbindung mit Sauerstoff eingehen, diese Metalle bzw. deren Ionen im Kristallgitter der kristallinen Phasen dieser Verbindungen unterschiedliche Gitterplätze einnehmen und die Metallionen ausschließlich sogenannte mittelgroße Metallionen im Sinne Systematik der Minerale nach Strunz, 9. Auflage, sind. Die Grenze zwischen mittelgroßen und großen Metallionen kann hier bei einem Wert des Ionenradius' von etwa 0,8 Å angenommen werden, wobei ab diesem Wert ein großes Metallion und unterhalb dieses Wertes ein mittelgroßes Metallion vorliegt. Die Grenze zwischen einem kleinen und einem mittelgroßen Metallion kann für einen Ionenradius von etwa 0,4 Å angenommen werden, wobei bis einschließlich zu diesem Wert ein kleines Metallion vorliegt und bei Werten oberhalb von 0,4 Å ein mittelgroßes Metallion vorliegt. Im Sinne der vorliegenden Erfindung wird als kleines Metallion $Si^{4+}$ betrachtet. Beispiele für mittelgroße Metallionen im Sinne der vorliegenden Erfindung sind insbesondere $Al^{3+}$, $Mg^{2+}$, $Fe^{2+}$, $Fe^{3+}$ sowie $Ti^{4+}$. Als großes Metallion im Sinne der vorliegenden Erfindung gilt $Zr^{4+}$. Die komplexen kristallinen Mischmetalloxide im Sinne der vorliegenden Anmeldung liegen damit insbesondere in den Gruppen 4.2.2. der Mineralsystematik nach Strunz mit einem Metall-zu-Sauerstoffverhältnis von 3:4 (beispielsweise Spinelle wie Gahnit $ZnAl_2O_4$ oder Spinell $MgAl_2O_4$) sowie 4.3.2 mit einem Metall-zu-Sauerstoffverhältnis von 2:3 oder 3:5 oder vergleichbar, beispielsweise Ilmenit $FeTiO_3$ oder $MgTiO_3$. Beispiele solcher komplexen kristallinen Mischmetalloxide sind somit Verbindungen, welche im Strukturtyp der Spinelle mit der allgemeinen Formel $AB_2O_4$, beispielsweise Spinell $MgAl_2O_4$ oder Gahnit $ZnAl_2O_4$, kristallisieren, oder Verbindungen, welche eine Ilmenit-artige Struktur sowie eine allgemeine Formel $ABO_3$ aufweisen. Hierbei umfasst jeweils A mindestens ein erstes Metall und B mindestens ein zweites Metall, wobei A und B jeweils unterschiedliche Gitterplätze in der Struktur einnehmen, beispielsweise aufgrund deutlich unterschiedlicher Ladungen und/oder Radien. Selbstverständlich ist es möglich, dass auch komplexe Mischmetalloxide als Mischkristalle vorliegen, also beispielsweise mehrere Metalle A mit ähnlichen Eigenschaften umfassen. Beispielsweise möglich ist das Vorliegen eines Spinell-artigen Mischkristalls der allgemeinen Zusammensetzung $(Mn, Zn) Al_2O_4$. Das Vorliegen dieser kristallinen Strukturen der komplexen Mischmetalloxide kann jeweils beispielsweise durch eine Röntgenbeugung nachgewiesen werden. Nicht umfasst vom Begriff der komplexen kristallinen Mischmetalloxide im Sinne der vorliegenden Erfindung sind Phasen, welche kleine oder große Metallionen umfassen. Insbesondere nicht umfasst vom Begriff der komplexen Mischmetalloxide in Sinne der vorliegenden Erfindung sind daher die kristalline Phasen, welche Silizium umfassen, wie beispielsweise silikatische Phasen, oder kristalline Phasen umfassend große Metallionen, beispielsweise kristallines $ZrTiO_4$.

Unter einem nicht eingefärbten Material wird im Rahmen der vorliegenden Erfindung ein Material verstanden, welches weder durch Zusatz von Farboxiden, beispielsweise Oxiden wie $V_2O_5$, NiO, $Cr_2O_3$ oder CoO, gezielt eingefärbt ist, noch sonstige färbende Bestandteile in nennenswertem Maß aufweist. Sonstige färbende Bestandteile sind beispielsweise solche, welche aus technischen Gründen, beispielsweise zur Läuterung oder als Keimbildner, dem Material zugegeben werden, und umfassen beispielhaft $CeO_2$, MnO und $Fe_2O_3$. Sie können beispielsweise jedoch auch im Rahmen der wirtschaftlichen Herstellung solcher Materialien als unvermeidliche Verunreinigungen durch Rohstoffe in das Material eingebracht werden. Somit kann auch ein nicht eingefärbtes Material noch eine gewisse Eigenfärbung, beispielsweise einen leichten Gelb- oder Graustich, aufweisen.

Als eine Dekorschicht, auch Dekoration oder Dekor, wird eine Schicht bezeichnet, welche auf das glaskeramische Material aufgetragen wird und neben technischen Funktionen, beispielsweise der Markierung von Heißbereichen oder der Abdeckung von unter einem glaskeramischen Material befindlichen technischen Bauteilen, auch eine dekorative Funktion wahrnimmt, beispielsweise durch das Hervorrufen bestimmter Farbeindrücke oder sonstiger visueller Effekte, beispielsweise einem Metallic-Effekt. Solche Dekorschichten können organisch, halborganisch (umfassend beispielsweise Sol-Gel-Farben, insbesondere pigmentierte Sol-Gel-Farben) oder anorganisch (umfassend beispielsweise glassflussbasierte Farben) basiert sein. Dekorschichten, welche zumindest in einem solchen Teilbereich des glaskeramischen Materials aufgetragen sind, der im Gebrauch betrieblich hohen thermischen Spannungen ausgesetzt sind, sind bevorzugt halborganisch oder anorganisch ausgebildet.

Die Streuung eines Materials wird im Rahmen der vorliegenden Erfindung mit einem Lamda950 UV/Vis-Spektrometer der Firma Perkin Elmer mit einer 150 mm Ulbricht-Kugel bestimmt. Eine Trennung von Transmission, Streuung und Reflektion wird erreicht, indem die Probe innerhalb der Ulbricht-Kugel positioniert wird und mehrere Messungen pro Probe durchgeführt werden, bei denen die nicht für die Streuung relevanten Anteile (Transmission und Reflektion) aus der Kugel ausgekoppelt und damit der Messung entzogen werden. Dieses Vorgehen erlaubt eine genaue Messung des Streulichtanteils in Abhängigkeit von der Wellenlänge. Als besonders repräsentativ hat sich der Streulichtanteil bei 634 nm erwiesen, welcher der Wellenlänge von roten LED entspricht.

Im Rahmen der vorliegenden Erfindung werden die Begriffe des Streulichtanteils und des Haze synonym verwendet.

## Zusammenfassung der Erfindung

Die Aufgabe wird gelöst durch ein Verfahren gemäß Anspruch 1, ein glaskeramisches Material nach Anspruch 4 sowie eine Verwendung nach 14. Bevorzugte Ausführungen finden sich in den abhängigen Ansprüchen.

Das Verfahren zur Herstellung eines glaskeramischen, nicht eingefärbten Materials mit geringem Streulichtanteil, umfasst die folgenden Schritte:

- Bereitstellen eines Ausgangsmaterials, umfassend ein keramisierbares Glas und/oder ein glaskeramisches Material 1,
- vorzugsweise Durchführen einer Temperaturbehandlung zur Erzeugung von Kristallisationskeimen bei einer Temperatur $T_{KB}$ und einer Dauer von $t_{KB}$,
- vorzugsweise Durchführen einer Temperaturbehandlung zur Kristallisation einer kristallinen Vorläuferphase bei einer Temperatur $T_{KV}$ und einer Dauer von $t_{KV}$, sowie
- Durchführen einer Temperaturbehandlung zur Kristallisation insbesondere von Keatit-Mischkristall bei einer Temperatur $T_{KK}$ und einer Zeitdauer $t_{KK}$,

wobei die Zeitdauer $t_{KK}$ basierend auf der Ausdehnung, vorzugsweise basierend auf der relativen prozentualen Ausdehnung des keramisierbaren Glases und/oder des glaskeramischen Materials vorgenommen wird.

In höchst überraschender Weise haben die Erfinder herausgefunden, dass die relative Längenänderung eines glaskeramischen Materials in direkter Relation zu dessen Streuverhalten steht, somit Aussagen hinsichtlich des Streulichtanteils, welcher durch dieses glaskeramische Material erzeugt wird, geben kann.

In ebenfalls sehr überraschender Weise haben die Erfinder ein Verfahren verwirklichen können, mit welchem durch die Erfassung der relativen Längenänderung eines glaskeramischen Materials und durch Bestimmung von definierten Punkten in einer Kurve der relativen Längenänderung, vorzugsweise bei isothermer Temperaturbeaufschlagung, Zeitdauern von Temperaturbehandlungen bereitgestellt werden, durch welche der Streulichtanteil des glaskeramischen Materials vermindert oder sogar auf ein Minimum reduziert werden kann.

In besonders vorteilhafter Weise ist dieses Verfahren nicht auf bestimmte singuläre Temperaturen beschränkt, sondern kann in definierten Prozessfenstern mit großen Temperaturbereichen durchgeführt werden.

Durch dieses Verfahren ist es ferner einfach möglich, für ein vorgegebenes glaskeramisches Material, unabhängig von weiteren chemischen oder physikalischen Analysen, nur auf Dilatometermessungen gestützt, die notwendigen Verfahrensparameter bereitzustellen.

Bevorzugt wird die Zeitdauer $t_{KK}$ bestimmt als die Zeitdauer, bis zu welcher die relative Längenänderung des glaskeramischen Materials 1 oder einer Probe des glaskeramischen Materials 1 bei einer gegebenen Temperatur $T_{KK}$ einen maximalen Wert annimmt, wobei vorzugsweise die Zeitdauer $t_{KK}$ mit $t_{Heiz}$, dem Zeitpunkt, zu welchem das glaskeramische Material 1 die sowohl maximale als auch ab diesem Zeitpunkt isotherm gehaltene Temperatur $T_{KK}$ erreicht hat, beginnt und zu dem Zeitpunkt endet, an welchem die relative Längenänderung des glaskeramischen Materials 1 oder der Probe des glaskeramischen Materials 1 ihr Maximum erreicht hat.

Bei einer weiteren Ausführungsform beginnt die Zeitdauer $t_{KK}$ mit $t_{Heiz}$, dem Zeitpunkt, zu welchem das glaskeramische Material 1 oder eine Probe des glaskeramischen Materials 1 die sowohl maximale als auch ab diesem Zeitpunkt isotherm gehaltene Temperatur $T_{KK}$ erreicht hat, und liegt das Ende der Zeitdauer der Temperaturbehandlung $t_{KK}$ für eine gegebene Temperatur $T_{KK}$ in einem Intervall, welches aus der Kurve der relativen prozentualen Längenänderung des glaskeramischen Materials oder einer Probe des glaskeramischen Materials und zwei Tangenten an diese Kurve bestimmt wird,

wobei die eine Tangente an einen linearen Teil eines ersten oder zweiten Anstiegs der Kurve angelegt ist und die andere Tangente an ein zeitlich darauf folgendes Plateau der Kurve angelegt ist und wobei die Zeitdauer der Temperaturbehandlung $t_{KK}$ in der Mitte eines Intervalls zu $t_{mitt}$ endet, welches aufgespannt wird durch die Punkte, an welchen die Tangenten von höheren Temperaturen aus gesehen die Kurve 92 gerade nicht mehr berühren

oder

die Zeitdauer $t_{KK}$ zu dem durch den Schnittpunkt der Tangenten bestimmten Zeitpunkt endet, wobei $t_{KK}$ bevorzugt nicht mehr als 30, besonders bevorzugt nicht mehr als 20 Minuten von der derart ermittelten Zeitdauer abweicht.

Bevorzugt beträgt die Summe von $t_{KV}$ und $t_{KB}$ inklusive möglicher Aufheizzeiten mehr als 15 Minuten und höchstens 250 Minuten, bevorzugt weniger als 200 Minuten, und beträgt vorzugsweise die Gesamtdauer der Temperaturbehandlung, gebildet aus der Summe der Dauern der Temperaturbehandlungen $t_{KB}$ + $t_{KV}$ + $t_{KK}$, sowie möglicher Aufheizzeiten weniger als fünf Stunden.

Bei einer besonders bevorzugten Ausführungsform werden die Zeitdauer $t_{KK}$ der Temperaturbehandlung zur Bildung von Keatit-Mischkristall und die Temperatur $T_{KK}$ aus einem Bereich gewählt, welcher in einem Temperatur-Zeit-Diagramm durch die folgenden Eckpunkte bestimmt ist:

2 min bei 1100°C
2 min bei 900°C
200 min bei 850°C
200 min bei 980°C.

Näherungsweise kann die Zeitdauer $t_{KK}$ auch bestimmt werden als die, bis zu welcher die relative Längenänderung der Probe des glaskeramischen Materials oder des glaskeramischen Materials bei einer gegebenen Temperatur $T_{KK}$ einen maximalen Wert annimmt.

Allgemein erfolgt die Herstellung von glaskeramischen Materialien in der Regel in einem mindestens zweistufigen Prozess. Handelt es sich bei dem Ausgangsmaterial um ein kristallisierbares Glas, wird dieses zunächst auf $T_{KB}$, die Keimbildungstemperatur, erhitzt. Bei dieser Temperatur kommt es durch Ausscheidung der Keimbildner und/oder durch Phasenseparation zur Bildung der Kristallisationskeime. Auf diesen Keimen wachsen in einem zweiten Schritt bei einer höheren Temperatur die Kristalle der Glaskeramik auf.

Im Falle der sogenannten LAS-Glaskeramiken, also Glaskeramiken im Materialsystem $Li_2O$-$Al_2O_3$-$SiO_2$, kommt es in Abhängigkeit von der Höhe der gewählten Temperatur zur Ausbildung unterschiedlicher Hauptkristallphasen. Während bei Temperaturen im Bereich von 700°C bis 950°C Hochquarz gebildet wird, kristallisiert bei höheren Temperaturen Keatit. Die genauen Temperaturwerte hängen dabei von der gewählten Zusammensetzung ab. Die Bildung der Keatit-Phase erfolgt durch eine Umbildung der Hochquarz-Phase.

Die Erfinder haben herausgefunden, dass nicht nur die Ausbildung der Kristallitkeime während der ersten, klassischerweise als Keimbildung bezeichneten Temperaturbehandlung bei der Temperatur $T_{KB}$ für die Einstellung einer möglichst geringen Streuung eine Rolle spielen kann. Vielmehr ist auch die Ausbildung der Vorläuferkristallphase vor der Keatit-Bildung, in der Regel also Hochquarz bzw. Hochquarzmischkristall, zu berücksichtigen.

Die Bildung der Vorläuferphase kann als eine Art zweite Keimbildung betrachtet werden. Überraschenderweise hat sich gezeigt, dass die Zeit der ersten Temperaturbehandlung, $t_{KB}$, verkürzt werden kann, wenn die Zeit für den zweiten Schritt, $t_{KV}$, verlängert wird, Umgekehrt kann auch $t_{KV}$ verkürzt werden, wenn dafür $t_{KB}$ erhöht wird. Die beiden Schritte der (klassischen) Keimbildung und der Kristallisation der Vorläuferphase können somit als eine erweiterte Keimbildung betrachtet werden. Gemäß einer bevorzugten Ausführungsform der Erfindung werden daher im Verfahren zur Erzeugung des glaskeramischen Materials die Schritte der Temperaturbehandlung zur Erzeugung von Kristallisationskeimen sowie die Temperaturbehandlung zur Erzeugung einer kristallinen Vorläuferphase (die erweitere Keimbildung) ausgeführt, wobei die Summe von $t_{KV}$ und $t_{KB}$ inklusive möglicher Aufheizzeiten zwischen mehr als 15 Minuten und höchstens 250 Minuten, bevorzugt weniger als 200 Minuten, beträgt.

Die Größe der Kristalle wird durch das Zusammenspiel der Höhe der Temperatur der Keramisierung, insbesondere durch die Temperatur bei der Bildung der Keatit-Phase, und der Dauer der Keramisierung, insbesondere der Dauer der maximalen Temperaturbehandlung, bei der Bildung der Keatit-Phase, bestimmt. Höhere Temperaturen und längere Dauern führen zu größeren Kristallen. Dies führt auch dazu, dass ein glaskeramisches Material, welches zunächst transparent ist, bei längerem Verbleib bei der maximalen Keramisierungstemperatur transluzent oder sogar opak werden kann. Dies ist besonders bei der Keatit-Bildung zu beobachten, da dieser Prozess häufig sehr schnell abläuft.

Die Höhe der optimalen Temperaturen sowie der Dauern für die Herstellung einer Glaskeramik, welche als Hauptkristallphase Keatit-Mischkristall umfasst und die weiterhin nur einen geringen Streulichtanteil aufweist, ist stark von der genauen Zusammensetzung abhängig. Gleichzeitig führt eine Erhöhung der Keramisierungstemperaturen zu einer Reduktion der benötigten Keramisierungszeit.

Überraschenderweise spielt jedoch noch ein weiterer Parameter eine Rolle für die Einstellung einer möglichst geringen Streuung. So kann ein Minimum an Streuung für eine gegebene Zusammensetzung dann erzielt werden, wenn die Keramisierung so durchgeführt wird, dass der Gehalt an Hochquarz im Kern der Glaskeramik minimiert wird.

Mit dem erfindungsgemäßen Verfahren ist ein glaskeramisches Material herstellbar, welches vorzugsweise nicht eingefärbt ist und einen geringen Streulichtanteil aufweist. Ein weiterer Aspekt der vorliegenden Erfindung betrifft ein derart hergestelltes glaskeramisches Material.

Das glaskeramische Material der vorliegenden Erfindung umfasst eine oberflächennahe Schicht sowie einen darunterliegenden Kern. Als Kern wird dabei der Bereich des glaskeramischen Materials bezeichnet, welcher mindestens ab einer Tiefe von 100 $\mu$m, gemessen von der Oberfläche des glaskeramischen Materials, vorliegt. Die oberflächennahe Schicht der glaskeramischen Materialien der vorliegenden Erfindung kann sich bis direkt an die Oberfläche des glaskeramischen Materials erstrecken. Allerdings ist es auch möglich, dass die glaskeramischen Materialien der vorliegenden Erfindung direkt an ihrer Oberflächen, d.h. an den Grenzflächen, zumindest bereichsweise eine glasige Oberflächenzone umfassen. Die oberflächennahe Schicht umfasst mindestens eine kristalline Phase, bevorzugt eine silikatbasierte kristalline Phase.

Das erfindungsgemäße glaskeramische Material ist nicht eingefärbt mit einem thermischen Ausdehnungskoeffizienten $\alpha$ von weniger als 1,5 ppm/K im Bereich von 20°C bis 700°C. Der Streulichtanteil des erfindungsgemäßen glaskeramischen Materials, bestimmt bei einer Wellenlänge von 634 nm sowie normiert auf ein glaskeramisches Material von 4 mm Dicke, beträgt weniger als 70%, bevorzugt weniger als bevorzugt 40%, besonders bevorzugt 25%. Das Material umfasst eine erste, oberflächennahe Schicht sowie einen darunterliegenden Kern. Dieser umfasst als Hauptkristallphase Keatit-Mischkristalle. Dabei wird als Hauptkristallphase eine Kristallphase dann bezeichnet, wenn ihr Anteil mehr als 50 Vol.-% der Summe der Kristallphasenanteile übersteigt. Der Kern des Materials liegt mindestens in einer Tiefe von 100 pm, gemessen von der Oberfläche des glaskeramischen Materials, vor. Mindestens die erste oberflächennahe Schicht ist röntgenographisch frei von kristallinen Phasen komplexer Mischmetalloxide, beispielsweise von Spinell-artigen Verbindungen der allgemeinen Formel $AB_2O_4$ und/oder von Ilmenit-artigen Verbindungen der allgemeinen Formel wie $ABO_3$, insbesondere frei von Gahnit $ZnAl_2O_4$ und/oder Magnesiumtitanat $MgTiO_3$.

Bevorzugt weist das Material eine Crack initiation load (CIL) von mehr als 0,9 N auf.

Zur Bestimmung der sogenannten "Crack initiation load" wird eine in einer vorzugsweise Stickstoff-gespülten Aufnahme fixierte Probe des zu prüfenden Materials, hier eines glaskeramischen Materials, mittels eines Materialprüfgerätes (Mikro-Kombi-Tester von CSM) mit einem Vickers-Eindringkörper V-I-O3 punktuell belastet. Die Vorgabelast wird innerhalb von 30 Sekunden linear auf einen ausgewählten Maximalwert erhöht und ohne Haltezeit wieder in derselben Zeit reduziert. Aufgrund der Belastung können, von den Ecken des pyramidalen Eindrucks des Vickerindenters ausgehend, 0 bis 4 Risse in der Glaskeramik entstehen. Der ausgewählte Maximalwert der Last wird stufenweise erhöht, bis bei jedem Eindruck 4 Risse auftreten. Bei jeder Kraft werden 5 bis 20, vorzugsweise wenigstens 10 Messungen durchgeführt, um die Variation der Rissbildung, die auch abhängig von der vorhandenen Oberfläche (Vorschäden) ist, erkennen zu können. Aus der Anzahl der Risse bei gleicher Kraft wird der Mittelwert gebildet.

Die Probe verbleibt vorzugsweise während der Messung bis zur Auszählung der Risse in der Aufnahme. Die Untersuchung wird vorzugsweise unter Stickstoffatmosphäre durchgeführt, um ein unterkritisches Risswachstum durch Feuchtigkeit der Umgebungsluft zu vermeiden.

Ermittelt wird so in mehreren Versuchen jeweils die Anzahl der von den Ecken des Eindrucks des Vickerindenters ausgehenden Risse in Abhängigkeit von der aufgebrachten Last. Die ermittelten Rissanzahlen werden in Relation zur Eindrückkraft in einem Diagramm aufgetragen und ein Fit einer Boltzmann-Funktion auf die Last/Riss-Kurve durchgeführt.

Schließlich wird der CIL-Wert der Last, bei der durchschnittlich 2 Risse auftreten, aus dieser Kurve abgelesen und als Kenngröße für die Stoßfestigkeit ausgegeben. Bevorzugt beträgt die so ermittelte Last für die glaskeramischen Materialien der vorliegenden Erfindung wenigstens 0,9 N.

Eine Beschreibung dieses Verfahrens findet sich auch im USamerikanischen Schutzrecht US 8,765,262 B2.

Neben der hohen CIL weisen die erfindungsgemäßen Glaskeramiken auch eine hohe Stoßfestigkeit auf, wie sie beispielsweise für die Verwendung als Kochfläche notwendig ist. Die Stoßfestigkeit wird dabei über einen Kugelfalltest bestimmt. In diesem Test wird eine 535 g schwere Stahlkugel aus einer definierten Höhe im Freifall auf die Mitte einer Probe fallen gelassen. Die Fallhöhe wird stufenweise gesteigert bis der Bruch eintritt. Die Stoßfestigkeit ist eine statistische Große und stellt den Mittelwert der an etwa 30 Proben mit den Maßen 200 x 200 x 4 mm ausgeführten Bruchfallhöhen dar. Der Test ist an den Kugelfalltest nach DIN 52306 angelehnt. Im Kugelfalltest zeigt sich, dass die erfindungsgemäßen Glaskeramiken Bruchfallhöhen von mehr als 15 cm, vorzugsweise mehr als 20 cm und besonders bevorzugt mehr als 25 cm (5%-Fraktil der Weibull-Verteilung) aufweisen.

Die Ausbildung einer Hochquarz-haltigen Oberflächenschicht scheint hier die Stoßfestigkeit in besonderer Weise zu erhöhen.

Gemäß einer Ausführungsform der Erfindung beträgt die Buntheit $C_{ab}^*$ des ungefärbten glaskeramischen Materials, bestimmt durch Messung gemäß der EN ISO 11664-4 im L*a*b*-Farbraum und erhalten gemäß der Gleichung

$$C_{ab}^* = \sqrt{(a*)^2 + (b*)^2}$$

höchstens 25, bevorzugt höchstens 15.

Somit ist gemäß einer bevorzugten Ausführungsform der Erfindung der Gehalt an Oxiden, die zu einer Färbung beitragen können, entsprechend der Anforderung an die Buntheit $C_{ab}^*$ zu begrenzen. Hierbei spielt in der Regel eine Kosten-/Nutzenabwägung eine Rolle, da Rohstoffe, die zum Beispiel einen besonders geringen Eisengehalt aufweisen, deutlich teurer sind, die resultierenden Glaskeramiken jedoch eine geringere Buntheit $C_{ab}^*$ aufweisen.

Nicht als färbendes Oxid in Sinne der vorliegenden Erfindung ist insbesondere $Nd_2O_3$ zu verstehen. Dieses Oxid kann verwendet werden, um eine unerwünschte Gelb- oder Braunfärbung des glaskeramischen Materials zu kompensieren. Der Zusatz dieses Oxids führt jedoch in der Regel zu einer Absenkung der Gesamttransmission, sodass auch hier eine anwendungsspezifische Abwägung erfolgen muss.

Die Größe der Kristalle bzw. Kristallite und damit letztlich die resultierende Streuung des Materials wird wesentlich durch die Keimbildung bedingt. Das Material muss über einen ausreichend langen Zeitraum im Bereich der Keimbildungstemperatur behandelt werden, sodass eine hohe Keimdichte erreicht wird. Da die Keramisierungsdauer in Hinblick auf eine wirtschaftliche Herstellung der Glaskeramik möglichst kurz gehalten werden sollte, muss hierfür eine ausreichende Menge an Keimbildnern in der Zusammensetzung vorhanden sein.

Gemäß einer weiteren Ausführungsform der Erfindung weist das glaskeramische Material der vorliegenden Erfindung daher die folgende Zusammensetzung in Gew.-% auf:

| | |
|---|---|
| $Al_2O_3$ | 18 - 23 |
| $Li_2O$ | 2,5 - 4,2 , bevorzugt 3 - 4,2 |
| $SiO_2$ | 60 - 69 |
| ZnO | 0 - 2, |
| $Na_2O$ | 0 - 1,5, bevorzugt 0 bis kleiner 1 |
| $K_2O$ | 0 - 1,5, bevorzugt 0 bis kleiner 1 |
| $Na_2O + K_2O$ | 0,2 - 1,5 |
| MgO | 0 - 1,5, bevorzugt 0 - 1 |
| CaO + SrO + BaO | 0 - 4 |
| $B_2O_3$ | 0 - 2 |
| $TiO_2$ | 2 - 5 |
| $ZrO_2$ | 0,5 - 2,5 |
| $P_2O_5$ | 0 - 3 |
| vorzugsweise $V_2O_5$ | 0 -0,08, bevorzugt 0-0,01 |
| $R_2O_3$ | 0 - 1, mit R = Lanthanoid, bevorzugt Nd |
| $MnO_2$ | 0 - 0,3 |
| $Fe_2O_3$ | 0 - 0,3, bevorzugt 0,008 bis kleiner 0,1, besonders bevorzugt 0 bis 0,02%, am bevorzugtesten in einem Bereich von 80 bis 500 ppm, |
| $SnO_2$ | 0 - kleiner 0,6, bevorzugt 0,05 bis kleiner 0,6, |

wobei das glaskeramische Material weiterhin Läutermittel, beispielsweise $As_2O_3$ und/oder $Sb_2O_3$, mit einem Gesamtgehalt von bevorzugt maximal 2 Gew.-%, umfassen kann, und weiterhin die Summe von $TiO_2 + ZrO_2 + SnO_2$ zwischen 3,8 und 6 Gew.-% beträgt. Ungefärbte Varianten des glaskeramischen Materials können vorzugsweise ca. 120 bis 140 ppm $Fe_2O_3$ aufweisen.

Dabei bilden die Komponenten $Li_2O$, $Al_2O_3$ und $SiO_2$ die grundlegenden Bestandteile der Kristallphase.

Eine Zusammensetzung wie vorstehend aufgeführt ist insbesondere deshalb von Vorteil, weil sich durch einen Keimbildnergehalt, welcher sich aus der Summe der Gehalte von $TiO_2$, $ZrO_2$ und $SnO_2$ ergibt und der mindestens 3,8 Gew.-% beträgt, Keramisierungsdauern von weniger als 5 Stunden Gesamtdauer realisieren lassen. Hierbei spielt sowohl der Gehalt an $TiO_2$ als Einzelkomponente, als auch die Gesamtsumme eine wichtige Rolle. Die Obergrenze ergibt sich im Falle von $TiO_2$ aus der nachteiligen Wirkung auf die Eigenfarbe der Glaskeramik. Für $ZrO_2$ und $SnO_2$ ergeben sich die Obergrenzen aus der bei größeren Gehalten stark zunehmenden Entglasungsneigung, welche die Formgebung erschwert.

Die Alkalioxide $Na_2O$ und $K_2O$ werden zur Anpassung von Viskosität und zur Verbesserung des Einschmelzverhaltens eingesetzt, ihre Summe ist jedoch wie vorstehend aufgeführt zu begrenzen, um die Bildung unerwünschter Nebenphasen soweit als möglich zu begrenzen.

MgO fördert zwar die Bildung von Keatit-Mischkristallen, d.h. führt zu einer Verminderung der maximalen Keramisierungstemperatur, führt jedoch gleichzeitig auch zur Bildung unerwünschter Nebenphasen, insbesondere zu kristallinen Phasen komplexer Mischmetalloxide, beispielsweise von Spinell oder Magnesiumtitanat. Dies wirkt sich zum einen negativ auf die Streuung des glaskeramischen Materials aus und führt zum anderen auch zu einer Erhöhung des thermischen Ausdehnungskoeffizienten.

Weitere Erdalkalioxide können zur Anpassung der Viskosität und ggf. zur Verringerung des Streulichtanteils beitragen.

$B_2O_3$ erlaubt eine deutliche Absenkung der Keramisierungstemperaturen, insbesondere der maximalen Keramisierungstemperatur. Einen ähnlichen Effekt weist auch Fluor auf.

$P_2O_5$ kann zur Verbesserung der Glasbildung eingesetzt werden, führt jedoch in Mengen von mehr als 3 Gew.-% zu einer Beeinträchtigung der Transmission durch eine Erhöhung der Streuung.

Es wurde beobachtet, dass Eisenoxid $Fe_2O_3$ die Keatit-Bildung beschleunigen kann, also ebenfalls als Keimbildner wirkt. Ein Gehalt von $Fe_2O_3$ von bis zu maximal 0,3 Gew.-% ist somit zulässig. Höhere Gehalte führen jedoch zu einer unerwünscht starken Gelbfärbung des glaskeramischen Materials.

Das glaskeramische Material der vorliegenden Erfindung ist bevorzugt weder durch Zusatz von Farboxiden, beispielsweise Oxiden wie $V_2O_5$, NiO, $Cr_2O_3$ oder CoO, gezielt eingefärbt, noch weist es sonstige färbende Bestandteile in nennenswertem Maß, also von jeweils mehr als 0,1 Gew.-%, auf. Geringe Mengen von $V_2O_5$ oder bevorzugt $Nd_2O_3$ können jedoch zur Korrektur des Farborts verwendet werden. So wird eine leichte Blaufärbung häufig als angenehmer empfunden als eine entsprechende Gelbfärbung.

$SnO_2$ und MnO können zur Unterstützung der Läuterung eingesetzt werden. Weiterhin können die üblichen aus der Glasverarbeitung bekannten Läutermittel wie $As_2O_3$, $Sb_2O_3$, $SO_4^-$, $Cl^-$, $CeO_2$ in Mengen bis zu insgesamt maximal 2 Gew.-% verwendet werden. Aus Gründen des Umweltschutzes ist die Läuterung mit $SnO_2$ bevorzugt.

Gemäß einer weiteren Ausführungsform der Erfindung weist das glaskeramische Material ein Verhältnis von $TiO_2 + SnO_2$ zu $ZrO_2$ von 1 - 11, bevorzugt 1,2 - 6,5, bezogen auf den Gewichtsanteil, auf.

Besonders bevorzugt beträgt der Gehalt an umwelt- oder gesundheitsschädlichen Substanzen, beispielsweise von Arsen, Antimon, Cadmium, Blei und/oder Halogeniden, jeweils unter 0,1 Gew.-%, bezogen auf die Gesamtmasse des glaskeramischen Materials.

Gemäß einer nochmals weiteren Ausführungsform der Erfindung beträgt die Transmission des ungefärbten glaskeramischen Materials im Wellenlängenbereich von 380 nm bis 780 nm, Y, mindestens 50%, bevorzugt mindestens 60%, bezogen auf eine Dicke des glaskeramischen Materials von 4 mm.

Als Transmission im Sinne der Erfindung wird die nach DIN 5033 gemessene Lichttransmission zwischen 380 und 780 nm bezeichnet. Diese ist identisch mit dem Y-Wert gemäß dem CIE-Farbsystem, gemessen mit Normlicht C, Beobachterwinkel 2 ° für eine 4 mm dicke polierte Glaskeramikprobe. Dieses Licht entspricht Weißlicht mit einer Farbtemperatur von 6800K und repräsentiert damit mittleres Tageslicht.

Als Transparenz wird im Rahmen dieser Erfindung eine Eigenschaft eines Materials bezeichnet, welche sich im Wesentlichen aus drei Faktoren ergibt:

- Die Größe von im Material enthaltenen Streupartikeln. Im Fall der vorliegenden Erfindung sind solche Streupartikel die Kristalle bzw. Kristallite, welche das glaskeramische Material umfasst.
- Der Brechzahlunterschied zwischen einer umhüllenden Matrix und darin eingebetteten Partikeln. Im Falle von glaskeramischem Material umfasst die Matrix Glas und die darin eingebetteten Partikel umfassen Kristallite bzw. Kristalle.
- Doppelbrechung des Materials. Im Falle eines glaskeramischen Materials ist hier insbesondere die Doppelbrechung der Kristallite zu berücksichtigen.

In diesem Sinne ist ein glaskeramisches Material transparent, wenn die Kristallitgröße kleiner als die Wellenlänge des Lichtes ist, der Unterschied zwischen Brechungsindices der vom Material umfassten Phasen, also beispielsweise der Hauptkristallphase und der sie umgebenden, oft glasig ausgebildeten Matrix, möglichst gering ist und die von Material umfassten Kristallphasen keine oder eine möglichst geringe optische Anisotropie aufweisen. Solche Bedingungen sind durch eine geschickte, gezielte Auswahl der Zusammensetzung und einer darauf genau abgestimmten gesteuerten Kristallisation einstellbar. Je besser diese Bedingungen für ein gegebenes Material erfüllt sind, desto höher ist die Transmission und desto geringer ist die Streuung.

Im Rahmen der vorliegenden Erfindung ist die Transparenz eines Materials, beispielsweise eines glaskeramischen Materials, nicht nur durch einen möglichst niedrigen Absorptionskoeffizienten für elektromagnetischen Strahlung im Wellenlängenbereich von 380 bis 780 nm zu verstehen. Transparenz eines Materials, beispielsweise eines glaskeramischen Materials, wird vorliegend auch beeinflusst durch eine möglichst geringe Streuung von elektromagnetischer Strahlung im Wellenlängenbereich von 380 bis 780 nm, insbesondere bei den Wellenlängen 440 nm (blaue LED), 520 nm (grüne LED) und 634 nm (rote LED).

Gemäß einer nochmals weiteren Ausführungsform der Erfindung umfasst das glaskeramische Material zumindest bereichsweise eine glasige Oberflächenzone mit einer Dicke zwischen 50 und 1000 nm, bevorzugt zwischen 300 und 800 nm.

Bevorzugt umfasst die oberflächennahe Schicht des glaskeramischen Materials in einer Tiefe von größer 1 $\mu$m bis zu maximal 100 $\mu$m Hochquarzmischkristall, bevorzugt Hochquarzmischkristall als Hauptkristallphase.

Gemäß einer nochmals bevorzugten Ausführungsform der Erfindung ist das glaskeramische Material als Glaskeramikscheibe ausgebildet, wobei mindestens eine Seite der Glaskeramikscheibe mindestens eine Dekorschicht aufweist.

Ein erfindungsgemäßes glaskeramisches Material findet breite Einsatzmöglichkeiten, insbesondere in Bereichen, in denen das Material betrieblich hohen thermischen Spannungen und/oder großen mechanischen Belastungen ausgesetzt ist. Beispielsweise umfassen diese Einsatzmöglichkeiten die Verwendung des glaskeramischen Materials, bevorzugt ausgebildet als Glaskeramikscheibe, als Kochfläche, Kaminsichtscheibe, feuerfeste Verglasung oder Sichtscheibe, als Tür eines Garraums, beispielsweise in einem Elektroherd, insbesondere in einem Elektroherd, welcher eine Pyrolysefunktion aufweist, oder als Abdeckung für Heizelemente, insbesondere als Koch- oder Bratfläche, als Weißware, als Heizkörperabdeckung, als Grillfläche, als Kaminsichtscheibe, als Trägerplatte oder Ofenauskleidung in der Keramik-, Solar- oder Pharmaindustrie oder der Medizintechnik, insbesondere für Produktionsprozesse unter hochreinen Bedingungen, als Auskleidung von Öfen, in denen chemische oder physikalische Beschichtungsverfahren durchgeführt werden oder als chemisch resistente Laborausstattung, als glaskeramischer Gegenstand für Hoch- oder extreme Niedrigtemperaturanwendungen, als Ofenfenster für Verbrennungsöfen, als Hitzeschild zur Abschirmung heißer Umgebungen, als Abdeckung für Reflektoren, Flutlichter, Projektoren, Beamer, Fotokopierer, für Anwendungen mit thermo-mechanischer Belastung, beispielsweise in Nachtsichtgeräten, als Wafersubstrat, als Gegenstand mit UV-Schutz, als Material für Gehäusekomponenten beispielsweise von elektronischen Geräten und/oder Abdeckgläser für IT wie Mobiltelefone, Laptops, Scannergläser oder ähnliches, als Fassadenplatte, als Brandschutzverglasung oder als Komponente für ballistischen Schutz.

Beispiele

Im Folgenden wird die Erfindung anhand von Beispielen näher erläutert.

Zusammensetzungen erfindungsgemäßer glaskeramischer Materialien finden sich in Tabelle 1.

**Tabelle 1**

| | AB1 | VB1 | AB2 | AB3 | AB4 | VB2 | AB5 | AB6 | AB7 | AB8 | AB9 |
|---|---|---|---|---|---|---|---|---|---|---|---|
| $Al_2O_3$ | 20,00 | 20,00 | 21,40 | 21,40 | 21,40 | 21,40 | 20,89 | 20,70 | 20,60 | 20,60 | 20,80 |
| $As_2O_3$ | 0,87 | 0,87 | | | | | 0,49 | | | | |
| BaO | 0,85 | 0,85 | 0,52 | 0,52 | 0,52 | 0,52 | 0,01 | 2,18 | 2,14 | 2,14 | 2,20 |
| CaO | 0,01 | 0,01 | 0,24 | 0,24 | 0,24 | 0,24 | 0,47 | 0,44 | 0,44 | 0,44 | 0,44 |
| $Fe_2O_3$ | 180 ppm | 180 ppm | 130 ppm | 130 ppm | 130 ppm | 130 ppm | 135 ppm | 150 ppm | 3 ppm | 3 ppm | 590 ppm |
| $K_2O$ | 0,20 | 0,20 | 0,11 | 0,11 | 0,11 | 0,11 | 0,06 | 0,26 | 0,27 | 0,27 | 0,27 |
| $Li_2O$ | 3,74 | 3,74 | 3,70 | 3,70 | 3,70 | 3,70 | 4,14 | 3,84 | 3,80 | 3,80 | 3,86 |
| MgO | 1,07 | 1,07 | 0,63 | 0,63 | 0,63 | 0,63 | 0,60 | 0,29 | 0,29 | 0,29 | 0,28 |
| $MnO_2$ | <0,005 | <0,005 | <0,005 | <0,005 | <0,005 | <0,005 | 0,00 | 0,02 | <0,001 | <0,001 | <0,001 |
| $Na_2O$ | 0,16 | 0,16 | 0,51 | 0,51 | 0,51 | 0,51 | 0,11 | 0,59 | 0,70 | 0,70 | 0,59 |
| $Nd_2O_3$ | 0,06 | 0,06 | 0,05 | 0,05 | 0,05 | 0,05 | 0,01 | | | | |
| $SiO_2$ | 67,30 | 67,30 | 66,49 | 66,49 | 66,49 | 66,49 | 67,51 | 65,30 | 65,60 | 65,60 | 65,20 |
| $SnO_2$ | | | 0,11 | 0,11 | 0,11 | 0,11 | | 0,24 | 0,25 | 0,25 | 0,25 |
| SrO | | | 0,54 | 0,54 | 0,54 | 0,54 | 0,10 | | | | |
| $TiO_2$ | 2,33 | 2,33 | 2,19 | 2,19 | 2,19 | 2,19 | 2,23 | 3,96 | 3,17 | 3,17 | 3,17 |
| ZnO | 1,59 | 1,59 | 1,76 | 1,76 | 1,76 | 1,76 | 1,58 | 1,40 | 1,41 | 1,41 | 1,39 |
| $ZrO_2$ | 1,79 | 1,79 | 1,71 | 1,71 | 1,71 | 1,71 | 1,75 | 0,69 | 1,40 | 1,40 | 1,40 |
| Erweiterte Keimbildung ($T_{BK}+T_{KV}$) | 900°C/90 min | 900°C/90 min | 900°C/90 min | 750°C/150 min + 900°C/90 min | 900°C/90 min | 900°C/90 min | 900°C/90 min | 750°C/20 min | 930°C/60 min | 930°C/60 min | 930°C/6 min |
| Bildung von Keatit | 960°C/30 min. | 960°C/120 min. | 960°C/60 min. | 960°C/60 min. | 970°C/15 min. | | 960°C/15 min. | 920°C/95 min. | 965°C/10 min. | 975°C/5 min. | 965°C/5 min. |
| HQ Anteil % | 1 | 1 | 1 | 1 | 6 | ~100 | | | 5 | 7 | |
| | AB1 | VB1 | AB2 | AB3 | AB4 | VB2 | AB5 | AB 6 | AB7 | AB8 | AB9 |
| Keatit-Anteil % | 95 | 95 | 95 | 96 | 94 | ~100 | ~100 | 100 | 93 | 91 | 97,5 |

| | AB1 | VB1 | AB2 | AB3 | AB4 | VB2 | AB5 | AB 6 | AB7 | AB8 | AB9 |
|---|---|---|---|---|---|---|---|---|---|---|---|
| $ZrTiO_4$% | 4 | 4 | 4 | 3 | - | n.b. | n.b. | | 2 | 2 | 2,5 |
| Kristallitgröße Keatit (nm) | 80 | 80 | 80 | 80 | 90 | | 90 | n.b. | n.b. | n.b. | n.b. |
| Streulichtant eil $\lambda$ = 444 nm | 59,36 | 61,45 | 46,32 | 35,30 | 40,69 | 1,43 | 62,78 | n.b. | 41,70 | 34,21 | 26,99 |
| $\lambda$ = 520 nm | 50,61 | 72,32 | 43,88 | 29,32 | 33,56 | 1,02 | 53,51 | n.b. | 34,77 | 24,74 | 23,53 |
| $\lambda$ = 634 nm | 36,44 | 72,08 | 35,05 | 21,41 | 24,79 | 0,74 | 38,43 | n.b. | 21,44 | 13,25 | 17,22 |

Die in Tabelle 1 aufgeführten Materialien wurden unter Verwendung von in der Glasindustrie üblichen Rohstoffen bei Temperaturen von ca. 1600 bis 1680°C erschmolzen und geläutert. Das Aufschmelzen des Gemenges erfolgte dabei zunächst in Tiegeln aus gesintertem Kieselglas und wurde dann in Pt/Rh-Tiegel mit Innentiegeln aus Kieselglas umgegossen und bei Temperaturen von ca. 1550°C für 30 Minuten durch Rühren homogenisiert. Nach Abstehen bei 1640°C für 2 h wurden Gussstücke von ca. 140mmx100mmx30mm Größe gegossen und in einem Kühlofen bei ca. 620 bis 680°C entspannt und auf Raumtemperatur abgekühlt. Aus den Gussstücken wurden die Prüfmuster für die Messung der Eigenschaften im glasigen Zustand und die Platten für die Keramisierung präpariert.

Beim Vergleich des Ausführungsbeispiels (AB) 1 sowie des Vergleichsbeispiels (VB) 1 wird die Bedeutung der Dauer der maximalen Temperaturbehandlung ersichtlich. So erfolgte die Temperaturbehandlung zur Bildung der Keatit-Phase des Ausführungsbeispiels 1 bei 960°C für 30 min, im Vergleichsbeispiel 1 ebenfalls bei 960°C, jedoch für 120 min. Die resultierende Glaskeramik des Ausführungsbeispiels 1 ist transparent im Sinne der vorliegenden Erfindung ausgebildet und weist einen geringen Streulichtanteil bei 634 nm von weniger als 35% auf. Vergleichsbeispiel 1 dagegen ist transluzent ausgebildet mit einem hohen Streulichtanteil von mehr als 70%.

Ausführungsbeispiele 2 und 3 zeigen beispielhaft den positiven Einfluss einer zusätzlichen Keimbildung. Während in Ausführungsbeispiel 2 keine separate Keimbildung durchgeführt wurde, womit ein Streulichtanteil von 35% erhalten wird, kann bei Durchführung einer Keimbildung der Streulichtanteil weiter reduziert werden, vorliegend auf 21,4%.

Bei Ausführungsbeispiel 4 erfolgte die Keatit-Bildung bei 970 statt 960°C. Diese geringe Erhöhung der Temperatur führt zu einer deutlichen Verkürzung der Dauer der Keatit-Bildung, sodass die Dauer der Keatit-Bildung nun nur noch 25% der Dauer bei 960°C beträgt.

Bei Vergleichsbeispiel 2 wird die Hauptkristallphase durch Hochquarz-Mischkristalle gebildet. Dies führt zwar zu einem guten Ergebnis hinsichtlich des Streulichtanteils, - allerdings wird auf diese Weise nur ein geringer CIL-Wert von lediglich 0,76N im Vergleich zu 1,51 N bei Ausführungsbeispiel 3 erzielt.

In der nachfolgenden Tabelle 2 sind weitere CIL-Werte die an erfindungsgemäßen glaskeramischen Materialien bestimmt wurden, aufgeführt.

**Tabelle 2**

| AB 3 | VB 2 | AB 7 | AB 8 | |
|---|---|---|---|---|
| 1,51 ± 0,17 N | 0,76±0,05 N | 1,60±0,13 N | 1,50±0,11 N | |

Die in Tabelle 1 angegebenen Kristallphasengehalte wurden mit Hilfe von Röntgenbeugungsmessungen an einem Panalytical X'Pert Pro Diffraktometer (Almelo, Niederlande) bestimmt. Als Röntgenstrahlung wurde eine über einen Ni-Filter erzeugte CuKα-Strahlung ($\lambda$ = 1.5060 Å) verwendet. Die Standard-Röntgenbeugungsmessungen an Pulver- als auch Festkörperproben wurden unter einer Bragg-Brentano Geometrie (θ-2θ) durchgeführt. Die Röntgenbeugungsdiagramme wurden zwischen 10° und 100° (2θ-Winkel) gemessen. Die Quantifizierung der relativen kristallinen Phasenanteile erfolgte über eine Rietveld-Analyse. Die absoluten Phasenanteile wurden mit Hilfe eines internen Standards berechnet. Die Messung erfolgte an gemahlenem Probenmaterial, wodurch der Volumenanteil des Kernbereichs deutlich dominiert. Die gemessenen Phasenanteile entsprechen daher der Phasenverteilung im Kern der Glaskeramik.

Zur Bestimmung der Kristallphasenanteile in der Oberflächen-nahen Schicht wurden Röntgenbeugungsdünnschichtmessungen durchgeführt. Dabei wurde primärseitig ein parabolischer Röntgenspiegel, sekundärseitig ein Parallelplattenkollimator verwendet. Die Röntgenbeugungsdiagramme wurden zwischen 10° und 60° (2θ-Winkel) gemessen. Der Einfallswinkel des Primärstrahles betrug 0,5°Ω, welcher bei diesen Proben einer Informationstiefe (90%) von ca. 2 $\mu$m entspricht.

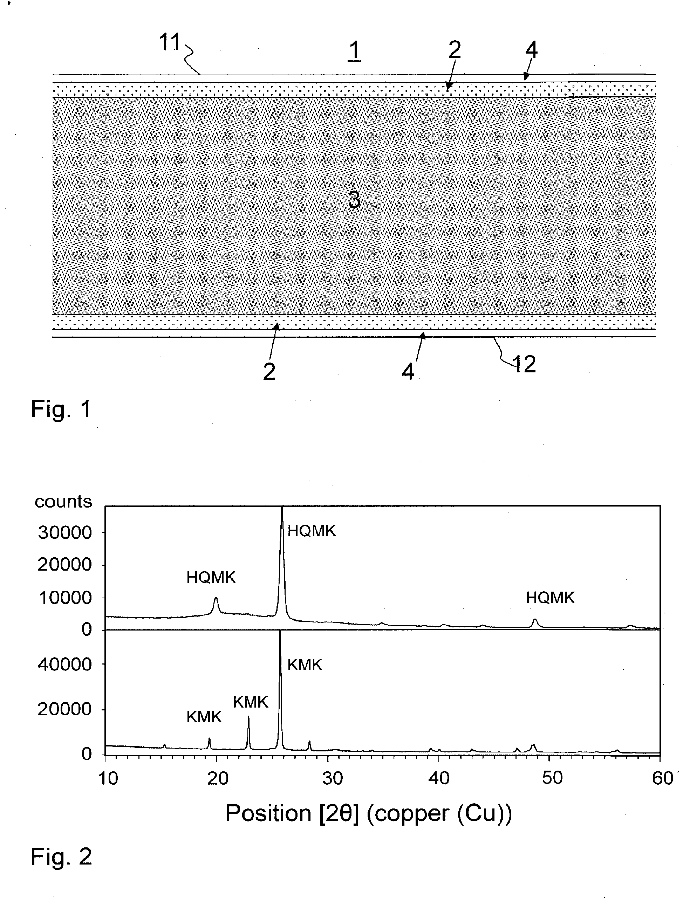

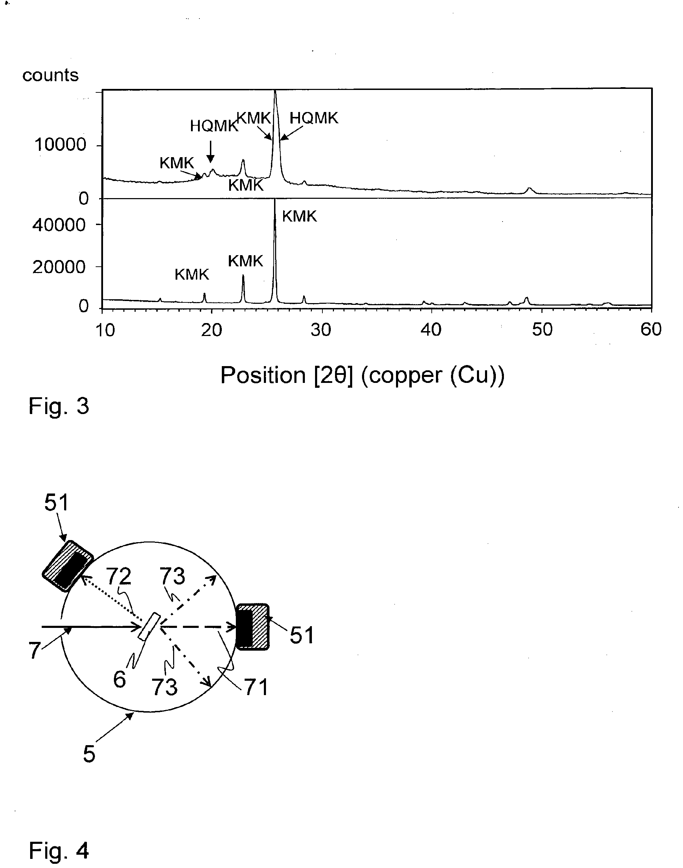

Fig. 2 und 3 verdeutlicht den Unterschied in den Kristallphasenanteilen zwischen oberflächennaher Schicht und Kern der Glaskeramik für die Ausführungsbeispiele 1 und 3. In beiden Fällen stellt Hochquarz die dominate Kristallphase in der Oberfläche dar, während im Kern Keatit-Mischkristall als Hauptkristallphase vorliegt.

Der lineare thermische Ausdehnungskoeffizient α der erfindungsgemäßen Glaskeramiken liegt unter 1,5 ppm/K, sodass diese für den Einsatz als Kochfläche geeignet sind.

Beim angegebenen Wert für den linearen thermischen Ausdehnungskoeffizienten handelt es sich um den nominalen mittleren thermischen Längenausdehnungskoeffizienten gemäß ISO 7991, welcher in statischer Messung bestimmt ist. Sofern nicht anders angegeben, wurde dieser im Bereich von 20-700°C angegeben.

Beispielhaft werden für Ausführungsbeispiel 3 folgende Ausdehnungskoeffizienten bestimmt:

**Tabelle 3**

| $\alpha_{25-300}$ ppmK$^{-1}$ | 0,7678 |
|---|---|

(fortgesetzt)

| $\alpha_{25-700}$ ppmK$^{-1}$ | 1,1332 |
|---|---|

Sie liegen deutlich unter dem kritischen Wert von 1,5 ppm/K.

Farbwerte wurden beispielhaft für die Ausführungsbeispiele 7 bis 9 bestimmt.

**Tabelle 4**

|  | AB 7 | Ab 8 | AB 9 |
|---|---|---|---|
| Y | 68,6 | 74,4 | 63,5 |
| L* | 86,3 | 89,1 | 83,7 |
| a* | -1,4 | -2,0 | -0,6 |
| b* | 13,8 | 15,5 | 17,5 |
| C* | 13,9 | 15,6 | 17,5 |

Der Vergleich von Ausführungsbeispiel 9 mit den Ausführungsbeispielen 7 und 8 verdeutlicht den Einfluss von $Fe_2O_3$: Der höhere Gehalt an $Fe_2O_3$ in Ausführungsbeispiel 9 von 0,059 % führt zu einer Erhöhung von C*.

Beschreibung der Zeichnungen

Im Folgenden wird die Erfindung anhand von Beispielen näher erläutert. Dabei beziehen sich gleiche Bezugszeichen auf gleiche oder entsprechende Elemente.

Es zeigen

Fig. 1      einen schematischen dargestellten Schnitt durch ein mit einem Verfahren gemäß einer Ausführungsform der Erfindung erhaltenes glaskeramisches Material,

Fig. 2 und 3      jeweils Röntgenbeugungsdiagramme für unterschiedliche Bereiche eines glaskeramischen Materials gemäß Ausführungsformen der Erfindung,

Fig. 4      eine schematische Darstellung der Messanordnung zur Bestimmung des Streulichtanteils für ein Material,

Fig. 5      den Verlauf des Kristallphasenanteils für ein glaskeramisches Material gemäß einer Ausführungsform der Erfindung,

Fig. 6      eine Darstellung der Keramisierungsbedingungen gemäß Ausführungsformen der Erfindung,

Fig. 7      eine Darstellung der relativen Längenänderung bei einer gegebenen Temperatur $T_{KK}$ zur Bestimmung der optimalen Zeitdauer $t_{KK}$ für das erfindungsgemäße Verfahren, sowie

Fig. 8      eine schematische Darstellung des Messaufbaus zur Bestimmung der relativen Längenänderung einer Probe in Abhängigkeit der Zeit bei einer bestimmten Temperatur.

Fig. 1 zeigt in schematischer und nicht maßstabsgetreuer Darstellung einen Schnitt durch ein glaskeramisches Material 1, welches vorzugsweise nicht eingefärbt ist und einen geringen Streulichtanteil aufweist, gemäß einer Ausführungsform der Erfindung.

Nachfolgend wird beispielhaft das erfindungsgemäße Verfahren anhand von nicht eingefärbtem glaskeramischen Material beschrieben, wobei das Verfahren nicht auf nicht eingefärbte glaskeramische Materialien beschränkt ist sondern auch bei eingefärbtem glaskeramischen Material oder eingefärbtem keramisierbaren Glas angewendet werden kann. Soweit sich die nachfolgende Beschreibung und die Ansprüche auf das glaskeramische Material beziehen, gilt dieses in analoger Weise auch für keramisierbares Glas.

Beispielhaft ist das glaskeramische Material 1 als scheibenförmiger Körper ausgebildet. Das Material 1 weist einen thermischen Ausdehnungskoeffizienten $\alpha$ von weniger als 1,5 ppm/K im Bereich von 20°C bis 700°C und einem Streulichtanteil, bestimmt bei einer Wellenlänge von 634 nm sowie normiert auf ein glaskeramisches Material von 4 mm Dicke, von weniger als 70%, bevorzugt weniger als 40 %, besonders bevorzugt weniger als 25 %, auf und umfasst eine erste, oberflächennahe Schicht 2, welche mindestens eine kristalline Phase, bevorzugt einen silikatbasierte kristalline Phase umfasst, sowie einen darunterliegenden Kern 3. Der Kern umfasst als Hauptkristallphase Keatit-Mischkristalle. Als Hauptkristallphase wird hierbei eine Kristallphase dann bezeichnet, wenn ihr Anteil mehr als 50 Vol.-% der Summe der Kristallphasenanteile übersteigt. Der Kern 3 liegt mindestens in einer Tiefe von 100 pm, gemessen von der Oberfläche des glaskeramischen Materials 1, vor. Außerdem ist mindestens die erste, oberflächennahe Schicht frei von kristallinen Phasen komplexer Mischmetalloxide, beispielsweise von Spinell-artigen Verbindungen der allgemeinen Formel $AB_2O_4$ und/oder von Ilmenit-artigen Verbindungen der allgemeinen Formel wie $ABO_3$, insbesondere frei von Gahnit $ZnAl_2O_4$ und/oder Magnesiumtitanat $MgTiO_3$.

Das glaskeramische Material 1 ist hier beispielhaft so ausgebildet, dass es zusätzlich eine glasige Oberflächenzone 4 mit einer Dicke zwischen 50 und 1000 nm, bevorzugt zwischen 300 und 800 nm, umfasst. Allgemein ist es jedoch auch möglich, dass das glaskeramische Material 1 ohne eine solche glasige Oberflächenzone 4 ausgebildet ist.

Das hier beispielhaft als scheibenförmiger Körper ausgebildete glaskeramische Material 1 weist die oberflächennahe Schicht 2 sowie die glasige Oberflächenzone 4 hier sowohl auf der Oberseite 11 als auch der Unterseite 12 des glaskeramischen Materials 1 auf, wobei hier sowohl die oberflächennahe Schicht 2 als auch die glasige Oberflächenzone 4 sowohl auf der Unterseite als auch auf der Oberseite im Wesentlichen dieselbe Dicke aufweisen, d.h. jeweils in im Wesentlichen dieselbe Tiefe, gemessen jeweils von der Oberfläche des glaskeramischen Materials 1, reichen. Als im Wesentlichen gleich wird im Rahmen der vorliegenden Erfindung die Dicke dann bezeichnet, wenn die Werte voneinander um nicht mehr als 20 % voneinander abweichen.

Es ist jedoch allgemein, ohne Beschränkung auf das hier dargestellte Beispiel, möglich, dass die jeweiligen Dicken sowohl der oberflächennahen Schicht 2 als auch der glasigen Oberflächenzone 4 an unterschiedlichen Stellen des glaskeramischen Materials 1 jeweils unterschiedliche Werte aufweisen. Beispielsweise ist es möglich, dass die glasige Oberflächenzone 4 im Falle des Vorliegens des glaskeramischen Materials 1 als scheibenförmiger Formkörper an der Oberseite 11 eine andere Dicke aufweist als an der Unterseite 12. Gleiches gilt auch für die oberflächennahe Schicht 2.

Die Figuren 2 und 3 verdeutlichen den Unterschied in den Kristallphasengehalten zwischen der oberflächennahen Schicht 2 und dem Kern 3 des glaskeramischen Materials 1. In Fig. 2 ist dies beispielhaft für ein glaskeramisches Material 1 gemäß der Zusammensetzung des Ausführungsbeispiels 1 gezeigt. Im oberen Teil von Fig. 2 ist dabei ein Röntgenbeugungsdiagramm für die oberflächennahe Schicht 2 zu sehen, bestimmt in Röntgendünnschichtbeugung. Hier stellt Hochquarz die dominante Kristallphase dar, wobei eine Auswertung der Kristallphasengehalte mittels einer Rietveldanalyse in diesem Fall einen Gehalt von 92 Vol.-% Hochquarzmischkristall (HQMK) zu lediglich 5 Vol.-% Keatit-Mischkristall (KMK) ergibt. Die einzelnen Peaks sind hierbei sowie in Fig. 3 mit der Kristallphase bezeichnet, für welche sie typisch sind. Im unteren Teil der Fig. 2 ist ein Röntgenbeugungsdiagramm für den Kern 3 dieser Glaskeramik zu sehen, wobei dieses Diagramm durch eine Beugungsmessung an Pulver bestimmt wurde. Die Rietveldanalyse ergibt hier einen Kristallphasengehalt von 0 Vol.-% Hochquarzmischkristall und 95 Gew.-% Keatit-Mischkristall.

Für das in Fig. 3 dargestellte glaskeramische Material 1, welches hier gemäß des Ausführungsbeispiels3 ausgebildet ist, ergibt sich der Kristallphasengehalt der oberflächennahe Schicht 2 zu 77 Vol.-% Hochquarzmischkristall sowie zu 21 Vol.-% Keatit-Mischkristall. Für den Kern 3 ergibt sich ein Kristallphasengehalt von 96 Vol.-% Keatit-Mischkristall und 0 Gew.-% Hochquarzmischkristall.

In Fig. 4 ist beispielhaft eine Anordnung zu Bestimmung des Streulichtanteils eines Materials abgebildet. Die Messung erfolgt hierbei in einer Ulbricht-Kugel 5, wobei gestreutes Licht auf die zentral positionierte Probe 6, beispielweise bestehend aus einem glaskeramischen Material 1 gemäß einer Ausführungsform der Erfindung. Das auf die Probe 6 treffende Licht 7 wird durch Wechselwirkung mit der Probe 6 in einen transmittierten Teil 71, einen reflektierten Teil 72 sowie den gestreuten Teil 73 aufgespalten. Detektiert wird in der Ulbricht-Kugel 5 zur Bestimmung des Streulichtanteils lediglich das gestreute Licht 73. Das transmittierte Licht 71 sowie das reflektierte Licht 72 werden in den geöffneten Lichtfallen 51 gefangen und nicht mitbestimmt.

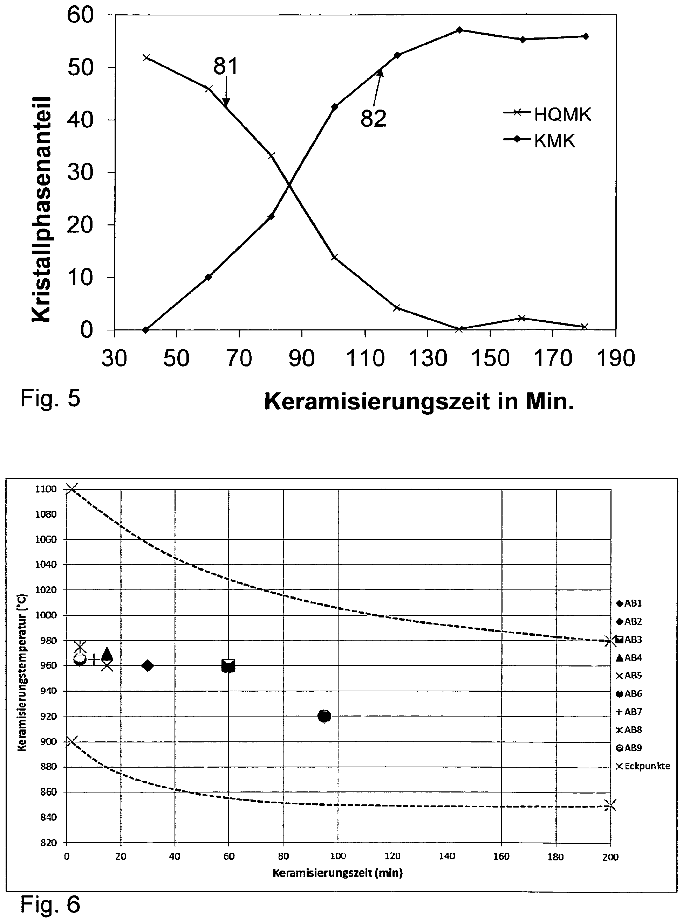

Fig. 5 zeigt beispielhaft den Verlauf des Gehalts von Hochquarzmischkristall (HQMK, Kurve 81) und Keatit-Mischkristall (KMK, Kurve 82) in einem glaskeramischen Material 1 gemäß einer Ausführungsform der Erfindung in Abhängigkeit von der Keramisierungsdauer einschließlich der verfahrensgemäßen Temperaturbehandlung $t_{KK}$ bei einer gegebenen Temperatur $T_{KK}$. Ein besonders geringer Streulichtanteil wird für ein glaskeramisches Material 1 dann erzielt, wenn die Dauer der Keramisierung $t_{KK}$ gerade so gewählt wird, dass der Gehalt von Hochquarzmischkristall gerade minimal ist. Vorliegend ist dies lediglich beispielhaft bei einer Dauer von 145 Minuten der Fall.

Fig. 6 zeigt eine Darstellung des Prozessfensters für das erfindungsgemäße Verfahren. Eingetragen sind hier die Bedingungen für die Bildung von Keatit-Mischkristallen, also die Zeitdauer $t_{KK}$ und die Temperatur $T_{KK}$, für Ausführungsbeispiele der vorliegenden Erfindung. Außerdem sind die Eckpunkte des Prozessfensters für die Gesamtdauer der Keramisierung und $t_{KK}$ in dieser Figur jeweils mit einem X angegeben. Diese liegen bei

2 min bei 1100°C

2 min bei 900°C
und
200 min bei 850°C
200 min bei 980°C.

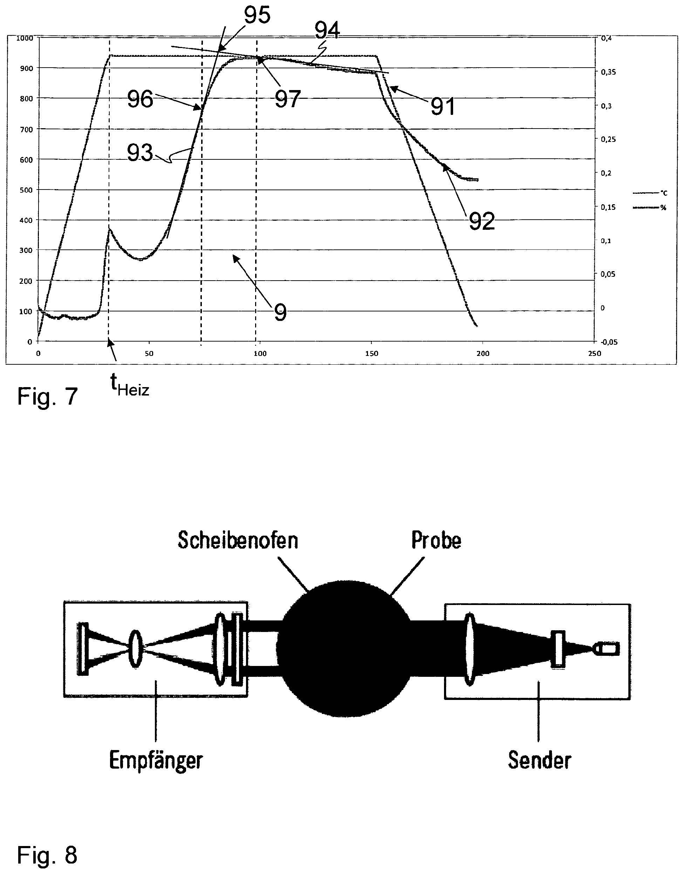

Fig. 7 zeigt in Kurve 91 den Verlauf der Temperatur des glaskeramischen Materials 1 gemäß einer Ausführungsform der Erfindung sowie in Kurve 92 dessen relative Längenänderung jeweils in Abhängigkeit von der Zeit, die in Figur 7 in Minuten angegeben ist.

Es ist zu erkennen, dass die Temperatur gemäß Kurve 92 zunächst steil ansteigt und danach auf dem Wert $T_{KK}$ verbleibt, so dass hierbei das glaskeramische Material 1 einer im Wesentlichen isothermen Temperaturbehandlung unterliegt.

Die Kurve 92 steigt zunächst während des Aufheizens steil an und sinkt danach etwas ab, um zu einem zweiten Mal wiederum steil anzusteigen. Nach diesem zweiten Anstieg geht die Kurve 92 in ein leicht abfallendes Plateau über.

Aus dieser Kurve 92 ist die Zeitdauer $t_{KK}$ ermittelbar, mit welcher für eine gegebene Temperatur $T_{KK}$ das Ausgangsmaterial mit dem erfindungsgemäßen Verfahren so behandelt wird, dass dessen Streulichtanteil vermindert oder minimal ist.

Diese Zeitdauer $t_{KK}$ beginnt zu dem mit $t_{Heiz}$ bezeichneten Zeitpunkt, zu welchem das glaskeramische Material 1 den im Wesentlichen ab hier isothermen Temperaturwert $T_{KK}$ angenommen hat, welcher auch dem maximalen Temperaturwert während der isothermen Temperaturbehandlung entspricht.

Für die Dilatometermessung, jedoch nicht auch zwingend für die Herstellung in industriellem Maßstab, soll die Aufheizzeit für eine genaue Bestimmung der Zeitdauer $t_{KK}$ möglichst gering und zumindest kleiner als die Zeitdauer $t_{KK}$ selbst sein.

Näherungsweise kann die Zeitdauer $t_{KK}$ zunächst bestimmt werden als die Zeitdauer, bis zu welcher die relative Längenänderung des glaskeramischen Materials 1 oder einer Probe des glaskeramischen Materials 1 bei einer gegebenen Temperatur $T_{KK}$ einen maximalen Wert annimmt. Dies ist somit die Zeitdauer beginnend mit $t_{Heiz}$, dem Zeitpunkt, zu welchem das glaskeramische Material 1 die sowohl maximale als auch ab diesem Zeitpunkt isotherme Temperatur erreicht hat, und endend zu dem Zeitpunkt, an welchem die relative Längenänderung ihr Maximum erreicht.

Das Maximum kann dadurch ermittelt werden, dass die Kurve 92 für eine Probe des glaskeramischen Materials 1 bestimmt wird und die ermittelte Zeitdauer $t_{KK}$ dann für das glaskeramische Material 1 selbst verwendet wird. Auch bei den nachfolgend beschriebenen Ausführungsformen des Verfahrens kann zunächst eine Probe des glaskeramischen Materials 1 verwendet werden und mit dem hierbei erhaltenen Wert für $t_{KK}$ dann das glaskeramische Material 1 selbst bearbeitet werden.

Zur genaueren Bestimmung des Endes der Zeitdauer $t_{KK}$ kann jedoch auch der Schnittpunkt 95 von zwei Tangenten 93 und 94 ermittelt werden, welches nachfolgend detaillierter beschrieben wird.

Die Tangente 93 schmiegt sich an den im Wesentlichen linearen Teil des zweiten Anstiegs der Kurve 92 an. Bei glaskeramischen Materialien, welche keinen kleineren ersten Anstieg der relativen Längenausdehnung sondern nur einen einzigen Anstieg zeigen, kann dann dieser einzige Anstieg für die Erstellung der Tangente 93 verwendet werden.

Die Tangente 94 schmiegt sich an das dem zweiten Anstieg folgende Plateau möglichst eng an. Um diese Tangente 94 für die Zwecke dieser Erfindung ausreichend genau zu erhalten, sollte das glaskeramische Material 1 zumindest so lange auf dem isothermen Temperaturwert gehalten werden, bis die relative Längenausdehnung für eine Dauer von 5 min, bevorzugt 10 min und am bevorzugtesten von 15 min im Wesentlichen konstant ist. Als konstant wird hierbei ein Wert angesehen, dessen Betrag sich um nicht mehr als 10 % ändert.

Das Ende der Zeitdauer $t_{KK}$ liegt bei dieser zweiten Ausführungsform des Verfahrens in einem Intervall 9, welches durch den Schnittpunkt 95 der Tangenten 93 und 94 an die beiden Äste der Kurve 92 der relativen Längenänderung definiert ist. Die Endpunkte 96, 97 des Intervalls 9 sind dabei durch die Punkte gegeben, an welchen die Tangenten 93, 94 an die beiden Äste der Kurve 92, ausgehend vom Schnittpunkt 95, die Kurve 92 von höheren Temperaturwerten aus gesehen erstmals berühren.

Dabei weicht $t_{KK}$ bevorzugt nicht mehr als 20, besonders bevorzugt nicht mehr als 10 Minuten von der Zeitdauer $t_{mitt}$ ab, welche in der Mitte des Intervalls 9 liegt.

Im vorliegenden Beispiel ergibt sich bei einer Temperatur $T_{KK}$ von 960°C die Dauer in der Mitte des Intervalls 9 zu 87,2 Minuten. Allerdings ist von dieser Dauer noch die Zeit $t_{Heiz}$ abzuziehen, in welche die Probe lediglich aufgeheizt wurde und noch nicht 960°C erreicht hatte, um so auf die tatsächliche Zeit $t_{KK}$ zu kommen. Die Aufheizdauer $t_{Heiz}$ lag vorliegend bei 32 Minuten, sodass sich $t_{KK}$ als Differenz aus "Intervallmitte" und Aufheizdauer zu 55 $\pm$ 10 Minuten, bevorzugt von 55 $\pm$ 5 Minuten, ergibt.

Weiterhin näherungsweise ergibt sich die Temperatur $t_{KK}$ aus dem Wert für die Zeit $\pm$ 30 Minuten, bevorzugt $\pm$ 20 Minuten am Schnittpunkt 95 der Tangenten 93 und 94 an die Kurve 92.

Weiterhin ist die Temperatur $t_{KK}$ näherungsweise gegeben durch den Startpunkt des Plateaus bzw. den Punkt 97.

Die Dilatometerkurve ist jeweils von der genauen Materialzusammensetzung abhängig.

Beispielhaft finden sich im Folgenden Zeitwerte, welche ab der Zeit $t_{Heiz}$ angegeben sowie für welche die relative Längenänderung sowie die Kristallphasengehalte von Keatitmischkristallen und Hochquarzmischkristallen sowie der Y-Wert gemäß dem CIE-Farbsystem, gemessen mit Normlicht C, Beobachterwinkel 2 °, bestimmt wurden.

| t ab $t_{Heiz}$ [min] | Y ($t_{vis}$) | %KMK | %HQMK | Relative Längenänderung |
|---|---|---|---|---|
| 0 | 0,849 | | 72 | 0% |
| 40 | 0,667 | 58 | 18 | 15% |
| 58 | 0,704 | 83 | | 26% |
| 120 | 0,641 | 84 | | 23% |

Die Zeit $t_{KK}$ ist hier mit 58 Minuten anzunehmen. Es ist die Zeit mit der größten relativen Längenänderung (26%), welche in der Messung den geringsten Streulichtanteil bzw. Haze aufweist.

Der vorstehende Wert für $t_{vis}$ von 0,704 wird auch durch die verfahrensgemäß dilatometrisch ermittelte Zeit $t_{KK}$ erreicht, bei welcher der Haze vermindert ist. Bei dieser Zeit von 58 min erreichte der Wert der relativen Längenausdehnung ein Maximum von 26 %.

Bei einer weiteren bevorzugten Ausführungsform des Verfahrens endet die Zeitdauer $t_{KK}$ zu dem durch den Schnittpunkt der Tangenten 93 und 94 bestimmten Zeitpunkt.

Bevorzugt beträgt Summe von $t_{KV}$ und $t_{KB}$ inklusive möglicher Aufheizzeiten mehr als 15 Minuten und höchstens 250 Minuten, bevorzugt höchstens weniger als 200 Minuten, und beträgt vorzugsweise die Gesamtdauer der Temperaturbehandlung, gebildet aus der Summe der Dauern der Temperaturbehandlungen $t_{KB}$ + $t_{KV}$ + $t_{KK}$, sowie möglicher Aufheizzeiten weniger als fünf Stunden.

Fig. 8 zeigt eine schematische Darstellung eines optischen Dilatometers, welches zur Bestimmung der relativen Längenänderung einer Probe, beispielsweise einer Probe aus einem glaskeramischen Material 1, bei einer bestimmten Temperatur verwendet werden kann. Die Probe des glaskeramischen Materials ist hierbei in der Mitte eines Scheibenofens angeordnet. Zur Längenmessung wird von der Senderseite ein paralleles Lichtbündel quer zu einem Empfänger gesendet. Die Probe blendet einen Teil des Lichtbündels aus. Die Auswertesoftware erkennt die äußeren Kanten (Schatten) und damit den Durchmesser der Probe.

Dehnt sich die Probe aus, so wandern die Kanten. Die Auswertesoftware rechnet dies in Längenänderungen um.

Bezugszeichenliste

| | |
|---|---|
| 1 - | glaskeramisches Material |
| 11 - | Oberseite des glaskeramischen Materials |
| 12 - | Unterseite des glaskeramischen Materials |
| 2 - | oberflächennahe Schicht |
| 3 - | Kern |
| 4 - | glasige Oberflächenzone |
| 5 - | Ulbricht-Kugel |
| 51 - | Lichtfalle (geöffnet) |
| 6 - | Probe |
| 7 - | einfallendes Licht |
| 71 - | transmittiertes Licht |
| 72 - | reflektiertes Licht |
| 73 - | gestreutes Licht |
| 81 - | Kurve des Kristallphasengehalts von Hochquarzmischkristall (HQMK) |
| 82 - | Kurve des Kristallphasengehalts von Keatit-Mischkristall (KMK) |
| 9 - | Zeitintervall |
| 91 - | Temperaturverlauf einer Probe über die Zeit bei Dilatometermessung |
| 92 - | relative Längenänderung über die Zeit bei einer Dilatometermessung |
| 93, 94 - | Tangenten an Kurve der relativen Längenänderung |
| 95 - | Schnittpunkt der Tangenten |
| 96, 97 - | Endpunkte des Intervalls 9 |

**Patentansprüche**

1. Verfahren zur Herstellung eines glaskeramischen, nicht eingefärbten Materials mit einem Streulichtanteil, bestimmt bei einer Wellenlänge von 634 nm sowie normiert auf ein glaskeramisches Material von 4 mm Dicke, von weniger als 70%, umfassend die folgenden Schritte:

   - Bereitstellen eines Ausgangsmaterials, umfassend ein keramisierbares Glas und/oder ein glaskeramisches Material,
   - vorzugsweise Durchführen einer Temperaturbehandlung zur Erzeugung von Kristallisationskeimen bei einer Temperatur $T_{KB}$ und einer Dauer von $t_{KB}$,
   - vorzugsweise Durchführen einer Temperaturbehandlung zur Kristallisation einer kristallinen Vorläuferphase bei einer Temperatur $T_{KV}$ und einer Dauer von $t_{KV}$, sowie
   - Durchführen einer Temperaturbehandlung zur Kristallisation insbesondere von Keatit-Mischkristall bei einer Temperatur $T_{KK}$ und einer Dauer $t_{KK}$,
   wobei die Dauer $t_{KK}$ basierend auf der Ausdehnung, vorzugsweise basierend auf der relativen prozentualen Ausdehnung des keramisierbaren Glases und/oder des glaskeramischen Materials, bestimmt wird.

2. Verfahren nach Anspruch 1, wobei die Summe von $t_{KV}$ und $t_{KB}$ inklusive möglicher Aufheizzeiten mehr als 15 Minuten und höchstens 250 Minuten, bevorzugt weniger als 200 Minuten, beträgt und vorzugsweise die Gesamtdauer der Temperaturbehandlung, gebildet aus der Summe der Dauern der Temperaturbehandlungen $t_{KB} + t_{KV} + t_{KK}$ sowie möglicher Aufheizzeiten weniger als fünf Stunden beträgt.

3. Verfahren nach einem der vorstehenden Ansprüche, wobei die Gesamtdauer der Keramisierung einschließlich der Temperaturbehandlung nach einem der vorstehenden Ansprüche $t_{KK}$ und die Temperatur $T_{KK}$ aus einem Bereich gewählt werden, welcher in einem Temperatur-ZeitDiagramm durch die folgenden Eckpunkte bestimmt ist:

   2 min bei 1100°C
   2 min bei 900°C
   200 min bei 850°C
   200 min bei 980°C.

4. Nicht eingefärbtes glaskeramisches Material, vorzugsweise hergestellt oder herstellbar mit in einem Verfahren gemäß den Ansprüchen 1 bis 3, mit einem thermischen Ausdehnungskoeffizienten $\alpha$ von weniger als 1,5 ppm/K im Bereich von 20°C bis 700°C und einem Streulichtanteil, bestimmt bei einer Wellenlänge von 634 nm sowie normiert auf ein glaskeramisches Material von 4 mm Dicke, von weniger als 70%, bevorzugt weniger als 40 %, besonders bevorzugt weniger als 25 %, umfassend eine erste, oberflächennahe Schicht, welche mindestens eine kristalline Phase, bevorzugt eine silikatbasierte kristalline Phase, umfasst, sowie einen darunterliegenden Kern, wobei der Kern als Hauptkristallphase Keatit-Mischkristalle umfasst und als Hauptkristallphase eine Kristallphase dann bezeichnet wird, wenn ihr Anteil mehr als 50 Vol.-% der Summe der Kristallphasenanteile übersteigt, und wobei der Kern mindestens in einer Tiefe von 100 $\mu$m, gemessen von der Oberfläche des glaskeramischen Materials, vorliegt, und wobei mindestens die erste oberflächennahe Schicht frei von komplexen kristallinen Phasen von Metalloxiden, in denen mindestens zwei Metalle eine Verbindung mit Sauerstoff eingehen und die Metallionen im Kristallgitter der kristallinen Phasen dieser Verbindung unterschiedliche Gitterplätze einnehmen und die Metallionen ausschließlich Ionen mit einem Ionenradius zwischen oberhalb von 0,4 Å und unterhalb von 0,8 Å sind, beispielsweise von Spinell-artigen Verbindungen der allgemeinen Formel $AB_2O_4$ und/oder von Ilmenit-artigen Verbindungen der allgemeinen Formel wie $ABO_3$, insbesondere frei von Gahnit $ZnAl_2O_4$ und/oder Magnesiumtitanat $MgTiO_3$, ist.

5. Glaskeramisches Material nach Anspruch 4, aufweisend eine Crack initiation load (CIL) von mehr als 0,9 N.

6. Glaskeramisches Material nach einem der Ansprüche 4 oder 5, wobei die Buntheit $C_{ab}^*$ des glaskeramischen Materials, bestimmt durch Messung gemäß der EN ISO 11664-4 im L*a*b*-Farbraum und erhalten gemäß der Gleichung

$$C_{ab}^* = \sqrt{\left(a*\right)^2 + \left(b*\right)^2}$$

höchstens 25, bevorzugt höchstens 15, beträgt.

**7.** Glaskeramisches Material nach einem der Ansprüche 4 bis 6, aufweisend eine Zusammensetzung in Gew.-% von

| | |
|---|---|
| $Al_2O_3$ | 18 - 23 |
| $Li_2O$ | 2,5 - 4,2 , bevorzugt 3 - 4,2 |
| $SiO_2$ | 60 - 69 |
| ZnO | 0 - 2, |
| $Na_2O$ | 0 - 1,5, bevorzugt 0 bis kleiner 1 |
| $K_2O$ | 0 - 1,5, bevorzugt 0 bis kleiner 1 |
| $Na_2O + K_2O$ | 0,2 - 1,5 |
| MgO | 0 - 1,5, bevorzugt 0 - 1 |
| CaO + SrO + BaO | 0 - 4 |
| $B_2O_3$ | 0 - 2 |
| $TiO_2$ | 2 - 5 |
| $ZrO_2$ | 0,5 - 2,5 |
| $P_2O_5$ | 0 - 3 |
| vorzugsweise $V_2O_5$ | 0,08, bevorzugt 0-0,01 |
| $R_2O_3$ | 0 - 1, mit R = Lanthanoid, bevorzugt Nd |
| $MnO_2$ | 0 - 0,3 |
| $Fe_2O_3$ | 0 - 0,3, bevorzugt 0,008 bis kleiner 0,1, besonders bevorzugt 0 bis 0,02%, am bevorzugtesten in einem Bereich von 80 - 500 ppm, |
| $SnO_2$ | 0 - kleiner 0,6, bevorzugt 0,05 bis kleiner 0,6, |

wobei das glaskeramische Material weiterhin Läutermittel, beispielsweise $As_2O_3$ und/oder $Sb_2O_3$, mit einem Gesamtgehalt von bevorzugt maximal 2 Gew.-%, umfassen kann, und die Summe von $TiO_2 + ZrO_2 + SnO_2$ zwischen 3,8 und 6 Gew.-% beträgt und wobei $Fe_2O_3$, insbesondere bei bevorzugten ungefärbten Glaskeramiken, in einem Bereich von 120 - 140 ppm liegt.

**8.** Glaskeramisches Material nach einem der Ansprüche 4 bis 7 mit einem Verhältnis von $TiO_2 + SnO_2$ zu $ZrO_2$ von 1 - 11, bevorzugt 1,2 - 6,5, bezogen auf den Gewichtsanteil.

**9.** Glaskeramisches Material nach einem der Ansprüche 4 bis 8, wobei der Gehalt von Arsen, Antimon, Cadmium, Blei und/oder Halogeniden, jeweils unter 0,1 Gew.-%, bezogen auf die Gesamtmasse des glaskeramischen Materials, beträgt.

**10.** Glaskeramisches Material nach einem der Ansprüche 4 bis 9, wobei die Transmission im Wellenlängenbereich von 380 bis 780 nm, Y, mindestens 50%, bevorzugt mindestens 60%, bezogen auf eine Dicke des glaskeramischen Materials von 4 mm, beträgt.

**11.** Glaskeramisches Material nach einem der Ansprüche 4 bis 10, wobei das glaskeramische Material zumindest bereichsweise eine glasige Oberflächenzone mit einer Dicke zwischen 50 und 1000 nm, bevorzugt zwischen 300 und 800 nm, umfasst.

**12.** Glaskeramisches Material nach einem der Ansprüche 4 bis 11, wobei die oberflächennahe Schicht in einer Tiefe von größer als 1 μm bis zu maximal 100 μm Hochquarzmischkristall umfasst, bevorzugt Hochquarzmischkristall als Hauptkristallphase.

**13.** Glaskeramisches Material nach einem der Ansprüche 4 bis 12, ausgebildet als Glaskeramikscheibe, wobei mindestens eine Seite der Glaskeramikscheibe mindestens eine Dekorschicht aufweist.

**14.** Verwendung eines glaskeramischen Materials nach einem der Ansprüche 4 bis 13 als Kochfläche, Kaminsichtscheibe, feuerfeste Verglasung oder Sichtscheibe, als Tür eines Garraums, beispielsweise in einem Elektroherd, insbesondere in einem Elektroherd, welcher eine Pyrolysefunktion aufweist, oder als Abdeckung für Heizelemente, insbesondere als Koch- oder Bratfläche, als Weißware, als Heizkörperabdeckung, als Grillfläche, als Kaminsichtscheibe, als Trägerplatte oder Ofenauskleidung in der Keramik-, Solar- oder Pharmaindustrie oder der Medizintechnik, insbesondere für Produktionsprozesse unter hochreinen Bedingungen, als Auskleidung von Öfen, in denen chemische oder physikalische Beschichtungsverfahren durchgeführt werden oder als chemisch resistente Laborausstattung, als glaskeramischer Gegenstand für Hoch- oder extreme Niedrigtemperaturanwendungen, als Ofenfenster für Verbrennungsöfen, als Hitzeschild zur Abschirmung heißer Umgebungen, als Abdeckung für Reflektoren, Flutlichter, Projektoren, Beamer, Fotokopierer, für Anwendungen mit thermo-mechanischer Belastung, beispielsweise in Nachtsichtgeräten, als Wafersubstrat, als Gegenstand mit UV-Schutz, als Material für Gehäusekomponenten beispielsweise von elektronischen Geräten und/oder Abdeckgläser für IT wie Mobiltelefone, Laptops, Scannergläser oder ähnliches, als Fassadenplatte, als Brandschutzverglasung oder als Komponente für ballistischen Schutz.

## Claims

1. A method for producing a glass ceramic non-coloured material with a scattered light component of less than 70 % as determined at a wavelength of 634 nm and normalised to a glass ceramic material of 4 mm thickness, comprising the steps of:

   - providing a starting material comprising a ceramizable glass and/or a glass ceramic material;
   - preferably performing a temperature treatment to produce crystallization seeds at a temperature $T_{KB}$ and for a duration $t_{KB}$;
   - preferably performing a temperature treatment to crystallize a crystalline precursor phase at a temperature $T_{KV}$ and for a duration $t_{KV}$; and
   - performing a temperature treatment for crystallization, in particular of keatite solid solution, at a temperature $T_{KK}$ and for a duration $t_{KK}$;
   wherein the duration $t_{KK}$ is determined based on the expansion, preferably based on the relative percentage expansion of the ceramizable glass and/or the glass ceramic material.

2. The method according to claim 1, wherein the sum of $t_{KV}$ and $t_{KB}$ including optional heating durations is more than 15 minutes and at most 250 minutes, preferably less than 200 minutes, and wherein preferably the total duration of the temperature treatment defined by the sum of the durations of the temperature treatments $t_{KB} + t_{KV} + t_{KK}$ and optional heating durations is less than five hours.

3. The method according to any one of the preceding claims, wherein the total duration of the ceramization including the temperature treatment according to any one of the preceding claims $t_{KK}$ and the temperature $T_{KK}$ are selected from a range which is determined in a temperature-time chart by the following vertices:

   2 min at 1100 °C
   2 min at 900 °C
   200 min at 850 °C
   200 min at 980 °C.

4. A non-coloured glass ceramic material, preferably produced or producible by a method according to claims 1 to 3, having a coefficient of thermal expansion $\alpha$ of less than 1.5 ppm/K in the range from 20 °C to 700 °C and a scattered light component of less than 70 %, preferably less than 40 %, most preferably less than 25 %, as determined at a wavelength of 634 nm and normalised to a glass ceramic material of 4 mm thickness, comprising a first near-surface layer that comprises at least one crystalline phase, preferably a silicate-based crystalline phase, and an underlying core, the core comprising keatite solid solution as the main crystal phase, with a crystal phase being referred to as the main crystal phase if its proportion exceeds more than 50 vol% of the total of crystal phase fractions; and wherein the core is at least at a depth of 100 $\mu$m as measured from the surface of the glass ceramic material; and wherein at least the first near-surface layer is free of complex crystalline phases of metal oxides in which at least two metals bound to oxygen and the metal ions occupy different lattice positions in the crystal lattice of the crystalline phases of this compound and the metal ions are exclusively ions with an ionic radius between more than 0.4 Å and less than 0.8 Å, for example spinel-like compounds of the general formula $AB_2O_4$ and/or ilmenite-like compounds of the general formula $ABO_3$, in particular free of gahnite $ZnAl_2O_4$ and/or magnesium titanate $MgTiO_3$.

5. The glass ceramic material according to claim 4, having a crack initiation load (CIL) of more than 0.9 N.

6. The glass ceramic material according to any one of claims 4 or 5, wherein the glass ceramic material has a chromaticity $C_{ab}^*$ of at most 25, preferably at most 15, as determined by a measurement according to EN ISO 11664-4 in the L*a*b* colour space and obtained according to the equation

$$C_{ab}^* = \sqrt{(a*)^2 + (b*)^2}\,.$$

**7.** The glass ceramic material according to any one of claims 4 to 6, comprising a composition, in wt%, of:

| | |
|---|---|
| $Al_2O_3$ | 18 - 23 |
| $Li_2O$ | 2.5 - 4.2, preferably 3 - 4.2 |
| $SiO_2$ | 60 - 69 |
| ZnO | 0 - 2 |
| $Na_2O$ | 0 - 1.5, preferably 0 to less than 1 |
| $K_2O$ | 0 - 1.5, preferably 0 to less than 1 |
| $Na_2O + K_2O$ | 0.2 - 1.5 |
| MgO | 0 - 1.5, preferably 0 -1 |
| CaO + SrO + BaO | 0 - 4 |
| $B_2O_3$ | 0 - 2 |
| $TiO_2$ | 2 - 5 |
| $ZrO_2$ | 0.5 - 2.5 |
| $P_2O_5$ | 0 - 3 |
| preferably $V_2O_5$ | 0.08, preferably 0 - 0.01 |
| $R_2O_3$ | 0 - 1, with R = lanthanide, preferably Nd |
| $MnO_2$ | 0 - 0.3 |
| $Fe_2O_3$ | 0 - 0.3, preferably 0.008 to less than 0.1, more preferably 0 to 0.02 %, most preferably in a range of 80 - 500 ppm, |
| $SnO_2$ | 0 - less than 0.6, preferably 0.05 to less than 0.6; |

wherein the glass ceramic material can further comprise refining agents such as $As_2O_3$ and/or $Sb_2O_3$ with a total content of preferably at most 2 wt%, and wherein the total of $TiO_2 + ZrO_2 + SnO_2$ amounts to between 3.8 and 6 wt%, and wherein $Fe_2O_3$ is in a range from 120 -140 ppm, in particular in the case of preferred non-coloured glass ceramics.

**8.** The glass ceramic material according to any one of claims 4 to 7, with a ratio of $TiO_2 + SnO_2$ to $ZrO_2$ of 1-11, preferably 1.2 - 6.5, based on the weight proportion.

**9.** The glass ceramic material according to any one of claims 4 to 8, wherein the content of arsenic, antimony, cadmium, lead and/or halides is below 0.1 wt% in each case, based on the total mass of the glass ceramic material.

**10.** The glass ceramic material according to any one of claims 4 to 9, wherein transmittance Y is at least 50 %, preferably at least 60 %, in the wavelength range from 380 to 780 nm, based on a thickness of the glass ceramic material of 4 mm.

**11.** The glass ceramic material according to any one of claims 4 to 10, wherein the glass ceramic material comprises a glassy surface zone with a thickness between 50 and 1000 nm, preferably between 300 and 800 nm, at least in sections thereof.

**12.** The glass ceramic material according to any one of claims 4 to 11, wherein the near-surface layer comprises high-quartz solid solution in a depth of greater than 1 $\mu$m up to a maximum of 100 $\mu$m, preferably high-quartz solid solution as the main crystal phase.

**13.** The glass ceramic material according to any one of claims 4 to 12, in the form of a glass ceramic sheet with at least one decorative layer provided on at least one side of the glass ceramic sheet,

**14.** Use of a glass ceramic material according to any one of claims 4 to 13 as a cooking surface, fireplace window, fireproof glazing or window, as a door of a cooking chamber, for example in an electric oven, in particular in an electric oven that has a pyrolysis function, or as a cover for heating elements, in particular as a cooking or frying surface, for white goods, as a cover for heating radiators, as a grilling surface, as a fireplace window, as a carrier sheet or as a furnace lining in ceramic, solar, or pharmaceutical industry or in medical technology, in particular for production processes under high-purity conditions, as a lining of furnaces in which chemical or physical coating processes are performed, or as chemically resistant laboratory equipment, as a glass ceramic article for applications under high or extreme low temperatures, as a furnace window for combustion furnaces, as a heat shield for shielding hot environments, as a cover for reflectors, floodlights, projectors, video projectors, photocopiers, for applications with thermo-mechanical strain, for example in night vision devices, as a wafer substrate, as an article with UV protection, as a material for casing components, for example of electronic devices and/or cover glasses in IT, such as mobile phones, laptop computers, scanner glasses or the like, as a facade panel, as fire protection glazing, or as a component for ballistic protection.

**Revendications**

1. Procédé de fabrication d'un matériau en vitrocéramique non coloré avec une proportion de lumière diffusée, définie pour une longueur d'onde de 634 nm et normée sur un matériau en vitrocéramique d'une épaisseur de 4 mm, inférieure à 70 %, comprenant les étapes suivantes :

   - de fourniture d'un matériau de départ, comprenant un verre céramisable et/ou un matériau en vitrocéramique,
   - de préférence de mise en œuvre d'un traitement thermique pour produire des germes de cristallisation à une température $T_{KB}$ et pendant une durée de $t_{KB}$,
   - de préférence de mise en œuvre d'un traitement thermique pour la cristallisation d'une phase de précurseur cristalline à une température $T_{KV}$ et pendant une durée de $t_{KV}$, ainsi que
   - de mise en œuvre d'un traitement thermique pour la cristallisation en particulier de cristal mixte à base de kéatite à une température $T_{KK}$ et pendant une durée $t_{KK}$, dans lequel la durée $t_{KK}$ est définie sur la base de l'allongement, de préférence sur la base de l'allongement relatif en pourcentage du verre céramisable et/ou du matériau en vitrocéramique.

2. Procédé selon la revendication 1, dans lequel la somme de $t_{KV}$ et de $t_{KB}$, y compris des temps de chauffage éventuels est supérieure à 15 minutes et est de 250 minutes au maximum, de manière préférée est inférieure à 200 minutes et de préférence la durée totale du traitement thermique, obtenue à partir de la somme des durées des traitements thermiques $t_{KB} + t_{KV} + t_{KK}$, ainsi que de temps de chauffage éventuels, est inférieure à cinq heures.

3. Procédé selon l'une quelconque des revendications précédentes, dans lequel la durée totale de la céramisation y compris le traitement thermique selon l'une quelconque des revendications précédentes $t_{KK}$ et la température $T_{KK}$ est choisie parmi une plage, laquelle est définie sur un diagramme température-durée par les éléments essentiels suivants :

   2 min à 1 100 °C
   2 min à 900 °C
   200 min à 850 °C
   200 min à 980 °C.

4. Matériau en vitrocéramique non coloré, de préférence fabriqué ou pouvant être fabriqué lors d'un procédé selon les revendications 1 à 3, avec un coefficient d'allongement thermique $\alpha$ inférieur à 1,5 ppm/K dans la plage de 20 °C à 700 °C et une proportion de lumière diffusée, définie pour une longueur d'onde de 634 nm et normée sur un matériau en vitrocéramique d'une épaisseur de 4 mm, inférieure à 70 %, de manière préférée inférieure à 40 %, de manière particulièrement préférée inférieure à 25 %, comprenant une première couche proche de la surface, laquelle comprend au moins une phase cristalline, de manière préférée une phase cristalline à base de silicate, ainsi qu'un noyau situé en dessous, dans lequel le noyau comprend en tant que phase cristalline principale des cristaux mixtes à base de kéatite et une phase cristalline est alors désignée en tant que phase cristalline principale quand sa proportion dépasse plus de 50 % en vol. de la somme des proportions de phase cristalline, et dans lequel le noyau est présent au moins à une profondeur de 100 $\mu$m, mesurée depuis la surface du matériau en vitrocéramique, et dans lequel au moins la première couche proche de la surface est dépourvue de phases cristallines complexes d'oxydes métalliques, dans lesquelles au moins deux métaux établissent une liaison à de l'oxygène et les ions métalliques adoptent, dans le réseau cristallin des phases cristallines de ladite liaison, différentes places réticulaires et les ions métalliques sont exclusivement des ions avec un rayon d'ion entre plus de 0,4 Å et moins de 0,8 Å, par exemple de composés de type spinelle de la formule générale $AB_2O_4$ et/ou de composés de type ilménite de la formule générale telle que $ABO_3$, en particulier est dépourvue de gahnite $ZnAl_2O_4$ et/ou de titanate de magnésium MgTiO₃.

5. Matériau en vitrocéramique selon la revendication 4, présentant une charge d'initiation de fissures (crack initiation load, CIL) supérieure à 0,9 N.

6. Matériau en vitrocéramique selon l'une quelconque des revendications 4 ou 5, dans lequel la variété de couleurs C$_{ab}$* du matériau en vitrocéramique, définie par la mesure selon la norme EN ISO 11664-4 dans l'espace colorimétrique L*a*b* et obtenue selon l'équation

$$C^*_{ab} = \sqrt{(a*)^2 + (b*)^2}$$

est de 25 au maximum, de manière préférée de 15 au maximum.

7. Matériau en vitrocéramique selon l'une quelconque des revendications 4 à 6, présentant une composition en % en poids de

| | |
|---|---|
| Al₂O₃ | 18 - 23 |
| Li₂O | 2,5 - 4,2, de manière préférée 3 - 4,2 |
| SiO₂ | 60 - 69 |
| ZnO | 0 - 2 |
| Na₂O | 0 - 1,5, de manière préférée 0 à moins de 1 |
| K₂O | 0 - 1,5, de manière préférée 0 à moins de 1 |
| Na₂O + K₂O | 0,2 - 1,5 |
| MgO | 0 - 1,5, de manière préférée 0 - 1 |
| CaO + SrO + BaO | 0 - 4 |
| B₂O₃ | 0 - 2 |
| TiO₂ | 2 - 5 |
| ZrO₂ | 0, 5 - 2,5 |
| P₂O₅ | 0 - 3 |
| de préférence V₂O₅ | 0,08, de manière préférée 0 - 0,01 |
| R₂O₃ | 0 - 1, avec R = lanthanide, de manière préférée Nd |
| MnO₂ | 0 - 0,3 |
| Fe₂O₃ | 0 - 0,3, de manière préférée 0,008 à moins de 0,1, de manière particulièrement préférée 0 à 0,02 %, de manière préférée entre toutes dans une plage de 80 - 500 ppm, |
| SnO₂ | 0 - inférieur à 0,6, de manière préférée 0,05 à moins de 0,6, |

dans lequel le matériau en vitrocéramique peut comprendre par ailleurs des agents d'affinage, par exemple du AS₂O₃ et/ou du Sb₂O₃, avec une teneur totale de manière préférée de 2 % en poids au maximum, et la somme de TiOz + ZrO₂ + SnO₂ est comprise entre 3,8 et 6 % en poids et dans lequel Fe₂O₃ se situe, en particulier pour des vitrocéramiques non colorées préférées, dans une plage de 120 - 140 ppm.

8. Matériau en vitrocéramique selon l'une quelconque des revendications 4 à 7 avec un rapport entre TiO₂ + SnO₂ et ZrO₂ de 1 - 11, de manière préférée de 1,2 - 6,5, par rapport à la proportion en poids.

9. Matériau en vitrocéramique selon l'une quelconque des revendications 4 à 8, dans lequel la teneur d'arsenic, d'antimoine, de cadmium, de plomb et/ou d'halogénures est respectivement inférieure à 0,1 % en poids, par rapport à la masse totale du matériau en vitrocéramique.

10. Matériau en vitrocéramique selon l'une quelconque des revendications 4 à 9, dans lequel la transmission dans la plage de longueurs d'onde va de 380 à 780 nm, Y, est d'au moins 50 %, de manière préférée d'au moins 60 %, par rapport à une épaisseur du matériau en vitrocéramique de 4 mm.

11. Matériau en vitrocéramique selon l'une quelconque des revendications 4 à 10, dans lequel le matériau en vitrocéramique comprend au moins par endroits une zone de surface vitreuse avec une épaisseur entre 50 et 1 000 nm, de manière préférée entre 300 et 800 nm.

12. Matériau en vitrocéramique selon l'une quelconque des revendications 4 à 11, dans lequel la couche proche de la surface comprend, à une profondeur supérieure à 1 $\mu$m à 100 $\mu$m au maximum, du cristal mixte de quartz haute température, de manière préférée du cristal mixte de quartz haute température en tant que phase cristalline principale.

13. Matériau en vitrocéramique selon l'une quelconque des revendications 4 à 12, réalisé en tant que disque en vitrocéramique, dans lequel au moins un côté du disque en vitrocéramique présente au moins une couche décorative.

14. Utilisation d'un matériau en vitrocéramique selon l'une quelconque des revendications 4 à 13 en tant que surface de cuisson, vitre de foyer, vitrage réfractaire ou vitre, en tant que porte d'une chambre cuisson, par exemple dans un four électrique, en particulier dans un four électrique, lequel présente une fonction de pyrolyse, ou en tant que recouvrement pour des éléments chauffants, en particulier en tant que surface de cuisson ou de rôtissage, en tant que surface de grill, en tant que vitre de foyer, en tant que plaque de support ou habillage de four dans l'industrie céramique, solaire ou pharmaceutique ou dans la technique médicale, en particulier pour des processus de production dans des conditions de grande pureté, en tant qu'habillage de fours, dans lesquels des procédés de revêtement chimiques ou physiques sont mis en œuvre ou en tant qu'équipement de laboratoire résistant chimiquement, en tant qu'objet en vitrocéramique pour des applications à température élevée ou extrêmement basse, en tant que fenêtre de four pour des fours d'incinération, en tant que bouclier thermique pour la protection d'environnements très chauds, en tant que recouvrement pour des réflecteurs, des projecteurs lumineux, des projecteurs, des vidéoprojecteurs, des photocopieurs, pour des applications avec une contrainte thermomécanique, par exemple dans des appareils de vision nocturne, en tant que substrat de tranche, en tant qu'objet avec une protection UV, en tant que matériau pour des composants d'appareil par exemple d'appareils électroniques et/ou vitres de recouvrement pour IT, tels que des téléphones portables, des ordinateurs portables, des vitres de scanner ou similaire, en tant que panneau de façade, en tant que vitrage coupe-feu ou en tant que composant pour la protection balistique.

Fig. 1

Fig. 2

Fig. 3

Fig. 4

Fig. 5

Fig. 6

Fig. 7    $t_{Heiz}$

Fig. 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4755488 A
- DE 2211317 A1
- US 4218512 A
- GB 1268845 A
- US 2005224491 A1
- US 4285728 A
- DE 1771149 A1
- US 3764444 A
- US 20050153142 A1
- US 2006160689 A
- US 2007004578 A

- EP 0861014 A1
- DE 10017701 A1
- DE 10110225 C2
- GB 1095254 A
- DE 102007025893 A1
- DE 102010006232 A1
- EP 3040318 A1
- EP 1170264 A1
- US 2010304948 A1
- US 8765262 B2